# EUROPEAN PATENT APPLICATION

(11) **EP 4 763 399 A1**
(43) Date of publication of application: **24.06.2026**
(21) Application number: 25215410.9
(22) Date of filing: 12.11.2025
(51) Int. Cl.: B23K 26/08, B23K 26/38, B23K 26/382, B23K 26/082

(54) **FIBER LASER MACHINE TOOLS, MANUFACTURING SYSTEMS AND METHODS FOR MODIFYING WALLS OF CELLS IN HONEYCOMB CORE STRUCTURES**

(30) Priority: 20.12.2024 US 202418990258
(71) Applicant: The Boeing Company, Arlington, VA 22202 (US)
(72) Inventor: POLUS, Jeffrey E., Arlington, 22202 (US)
(74) Representative: Bryn-Jacobsen, Caelia

(57) **Abstract**

A fiber laser machine tool includes a mounting plate, a fiber laser probe and a rotary actuator. The mounting plate for mounting the tool to a manufacturing system for vertical and horizontal movement in relation to a honeycomb core structure. The fiber laser probe includes an inner core with a fiber optic conductor. The inner core is installed on the mounting plate to prevent rotation of the center. The probe also includes a rotational outer sheath with a mirror for reflecting laser energy from the fiber optic conductor toward walls of cells in the honeycomb core structure to perforate the walls. The rotary actuator is installed on the mounting plate and includes a shaft linked to the rotational outer sheath to enable rotation of the mirror. Various manufacturing systems and methods for modifying walls of cells in honeycomb core structures are also disclosed.

## Description

### FIELD

The present disclosure relates generally to fiber laser machine tools and manufacturing systems and, particularly, methods for modifying walls of cells in honeycomb core structures using the fiber laser machine tools and the manufacturing systems. For example, the manufacturing system may include a gantry, an X-carriage and a Z-head for horizontal and vertical positioning of the fiber laser machine tool. The fiber laser machine tool includes a fiber laser probe that fits within the cells of the honeycomb core structure. The fiber laser machine tool may include a rotary actuator for rotational movement of fiber optic emissions from the fiber laser probe toward the walls of the cells.

### BACKGROUND

Non-metallic honeycomb core stock does not come in a pre-perforated form. This is because the core requires post-expansion dips in phenolic resin which provides the core with rigidity. The dipping would inherently fill the holes and seal them which eliminates pre-dipping attempts at ventilation. Thus, perforating non-metallic honeycomb core is not implemented by manufacturers of non-metallic honeycomb core stock. Many non-metallic honeycomb core parts are exposed to repeated high temperature environments. Off gassing of non-ventilated honeycomb cores can damage the core. Similarly, movement of the core during fabrication operations when low pressure atmospheres are trapped in the cells can damage the core. Existing solutions to these problems require slitting or slotting each cell (a machining process) after the core surface is net machined. It is extremely time consuming and knocks down the physical strength of the assembly which must be taken into account during design and analysis of the structure. This often results in over design which increases weight.

Accordingly, those skilled in the art continue with research and development efforts to ventilate non-metallic honeycomb cores.

### SUMMARY

Disclosed are examples of fiber laser machine tools, manufacturing systems and methods for modifying walls of cells in honeycomb core structures. The following is a non-exhaustive list of examples, which may or may not be claimed, of the subject matter according to the present disclosure.

In an example, the disclosed fiber laser machine tool for modifying walls of cells in a honeycomb core structure includes a mounting plate, a fiber laser probe and a rotary actuator. The mounting plate for mounting the fiber laser machine tool to a manufacturing system to enable movement of the fiber laser machine tool in a vertical direction (Z) and a horizontal direction (X, Y) in relation to the honeycomb core structure during operation of the manufacturing system. The fiber laser probe includes an inner core with a fiber optic conductor. The inner core is installed on the mounting plate to prevent rotation of the fiber optic conductor. The fiber laser probe also includes a rotational outer sheath with a mirror secured thereto for reflecting laser energy from the fiber optic conductor toward a wall of a cell in the honeycomb core structure to perforate a plurality of walls of a plurality of cells in the honeycomb core structure. The rotary actuator is installed on the mounting plate and includes a shaft linked to the rotational outer sheath of the fiber laser probe to enable rotation of the mirror during operation of the manufacturing system.

In an example, the disclosed manufacturing system for modifying walls of cells in a honeycomb core structure includes a machine bed, a gantry, an X-carriage, a Z-head and a fiber laser machine tool. The machine bed with a work surface for receiving and securing the honeycomb core structure. The gantry mounted on the machine bed and rising above the honeycomb core structure. The gantry movable in a Y-direction along the machine bed. The X-carriage mounted on the gantry above the honeycomb core structure. The X-carriage movable across the gantry and in an X-direction (X) in relation to the machine bed. The Z-head is mounted on the X-carriage above the honeycomb core structure and includes a mounting platform movable in a Z-direction (Z) in relation to the work surface. The fiber laser machine tool mounted on the Z-head to perforate a plurality of walls of a plurality of cells in the honeycomb core structure.

In an example, a method for modifying walls of cells in a honeycomb core structure includes: (1) sequentially controlling horizontal displacement of a fiber laser machine tool over a plurality of cells in the honeycomb core structure on a work surface of a machine bed in a manufacturing system; (2) sequentially controlling vertical displacement of a fiber laser probe of the fiber laser machine tool to a plurality of heights within each cell of the plurality of cells, the fiber laser probe including an inner core with a fiber optic conductor; (3) sequentially controlling angular displacement of a mirror secured to a rotational outer sheath of the fiber laser probe to a plurality of angular positions in walls in each cell of the plurality of cells over the plurality of heights within each cell of the plurality of cells; and (4) sequentially controlling a plurality of laser emissions that reflect from the mirror of the fiber laser probe toward a plurality of target points on the walls in each cell of the plurality of cells over the plurality of heights and the plurality of angular positions to cut a plurality of perforations in each cell of the plurality of cells.

Other examples of the disclosed fiber laser machine tools, manufacturing systems and methods for modifying walls of cells in honeycomb core structures will become apparent from the following detailed description, the accompanying drawings and the appended claims.

### BRIEF DESCRIPTION OF THE DRAWINGS

Fig. 1 is a functional block diagram of an example of a fiber laser machine tool;
Fig. 2 is a perspective view of an example of a honeycomb core structure;
Fig. 3 is a perspective view of an example of a manufacturing system with the fiber laser machine tool of Fig. 1;
Fig. 4 is a perspective view of an example of a gear train associated with a rotary actuator and a fiber laser probe in the fiber laser machine tool of Fig. 1;
Fig. 5 is a cross-sectional perspective view of an example of the fiber laser probe 104 in the fiber laser machine tool of Fig. 1;
Fig. 6 is a top view of an example of a drive gear, a follower gear and a drive chain associated with the rotary actuator and the fiber laser probe in another example of a fiber laser machine tool;
Fig. 7 is a top view of another example of a gear train associated with the rotary actuator and the fiber laser probe in yet another example of a fiber laser machine tool;
Fig. 8 is a top view of an example of a drive pulley, a follower pulley and a drive belt associated with the rotary actuator and the fiber laser probe in yet another example of a fiber laser machine tool;
Fig. 9 is a top view of an example of a belt train associated with the rotary actuator and the fiber laser probe in still another example of a fiber laser machine tool;
Fig. 10 is a flow diagram of an example of a method for modifying walls of cells in a honeycomb core structure;
Fig. 11, in combination with Fig. 10, is a flow diagram of another example of a method for modifying walls of cells in a honeycomb core structure;
Fig. 12, in combination with Figs. 10 and 11, is a flow diagram of yet another example of a method for modifying walls of cells in a honeycomb core structure;
Fig. 13, in combination with Figs. 10 and 11, is a flow diagram of still yet another example of a method for modifying walls of cells in a honeycomb core structure;
Fig. 14 is a side view of another example of a manufacturing system with yet another example of a fiber laser machine tool;
Fig. 15A is a perspective view of a portion of the manufacturing system of Fig. 3 with the fiber laser machine tool approaching an example of a honeycomb core structure;
Fig. 15B is a perspective view of the portion of the manufacturing system of Fig. 15A with the fiber laser probe of the fiber laser machine tool at a first vertical position within the example of the honeycomb core structure;
Fig. 15C is a perspective view of the portion of the manufacturing system of Fig. 15A with the fiber laser probe of the fiber laser machine tool at a second vertical position within the example of the honeycomb core structure;
Fig. 15D is a perspective view of the portion of the manufacturing system of Fig. 15A with the fiber laser probe of the fiber laser machine tool at a third vertical position within the example of the honeycomb core structure;
Fig. 15E is a detail perspective view of a portion of an example of a guide assembly with a guide opening for the fiber laser probe in the manufacturing system of Figs. 15A-D;
Fig. 16, in combination with Fig. 10, is a flow diagram of another example of a method for modifying walls of cells in a honeycomb core structure;
Fig. 17 is a flow diagram of an example of the controlling of the horizontal displacement in the method of Fig. 11;
Fig. 18 is a flow diagram of an example of the controlling of the vertical displacement in the method of Fig. 11;
Fig. 19 is a flow diagram of an example of the adjusting of the vertical displacement in the method of Fig. 12;
Fig. 20 is a flow diagram of an example of the repeating of the adjusting of the vertical displacement in the method of Fig. 12;
Fig. 21 is a flow diagram of an example of the repeating of the controlling of the horizontal displacement and the repeating of the controlling of the vertical displacement in the method of Fig. 13 in conjunction with cutting perforations in a plurality of cells of a honeycomb core structure;
Fig. 22 is a flow diagram of an example of the repeating of the controlling of the horizontal displacement and the repeating of the controlling of the vertical displacement in the method of Fig. 13 in conjunction with cutting perforations in all cells of a honeycomb core structure;
Fig. 23 is a block diagram of aircraft production and service methodology that implements using one or more of the examples of fiber laser machine tools, manufacturing systems and methods for modifying walls of honeycomb core structures disclosed herein to fabricate components of the aircraft; and
Fig. 24 is a schematic illustration of an aircraft that incorporates components fabricated using one or more of the examples of fiber laser machine tools, manufacturing systems and methods for modifying walls of honeycomb core structures disclosed herein.

### DETAILED DESCRIPTION

The various examples of fiber laser machine tools 100, manufacturing systems 300 and methods 1000, 1100, 1200, 1300, 1600, 2600 for modifying walls 202 of cells 204 in honeycomb core structures 200 provide various automated technique that result in ventilated honeycomb core structures 200, including non-metallic honeycomb core structures. The disclosed techniques solve multiple issues. For example, the various techniques allow for the venting of off gassing by products in honeycomb cored assemblies exposed to high temperature environments. The techniques also prevent movement of the core during fabrication operations when low pressure atmospheres are trapped in the cells during the fabrication/bonding process (e.g., the accordion effect). Additionally, the techniques reduce design allowable knock down factor as compared to slotting core which is the current method for ventilating non-metallic honeycomb core structures.

In one example, a system for laser perforation of core cells includes a CNC 3-axis displacement and positioning machine, an angular-displacement rotary drive motor and a laser probe. The CNC 3-axis displacement and positioning machine has a positionable, vertically displaceable tool end. The angular-displacement rotary drive motor is disposed on the tool end for rotating to an angular position. The laser probe is coupled to the rotary drive motor and disposed on the vertically-displaceable tool end. The laser probe has a tapered tip aiding guidance into a core cell and a side aperture through which a laser beam is emitted. The laser probe is configured to be positioned and vertically-displaced into a core cell and to be rotated to a number of angular positions within the core cell at which to emit a laser beam to produce a plurality of perforations within the core cell walls.

In another example, a system for laser perforation of core cell walls includes an angular-displacement rotary drive motor and a laser probe. The angular-displacement rotary drive motor is disposed on a CNC tool end for rotating to an angular position. The laser probe is coupled to the rotary drive motor and has a tapered tip for guidance and a side hole through which a laser beam is emitted. The laser probe is vertically-displaced into a core cell and rotated to angular positions at which the laser produces perforations in the cell walls of the core.

The probe is inserted into the core and the laser is fired and rotated 30° at a time to align the laser to be perpendicular to the core walls. For example, the probe moves up the Z axis as it fires the laser to produce a series of perforations that ensure ventilation of core block.

The various techniques disclose herein produce uniform vent holes throughout a base block of core and the perforations can either be lined up on waterline stations or randomly distributed (which may have additional structural advantages). Likewise, various techniques are far less destructive of the base core material than drilling operations and produce much lower knock down values. These techniques are also many times faster than the existing drilling methods.

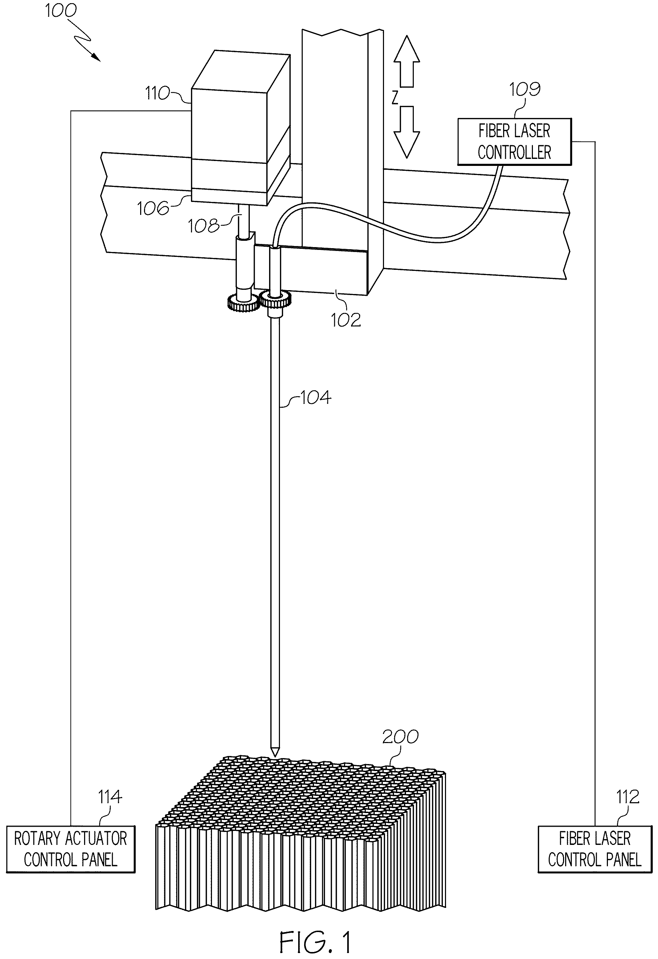

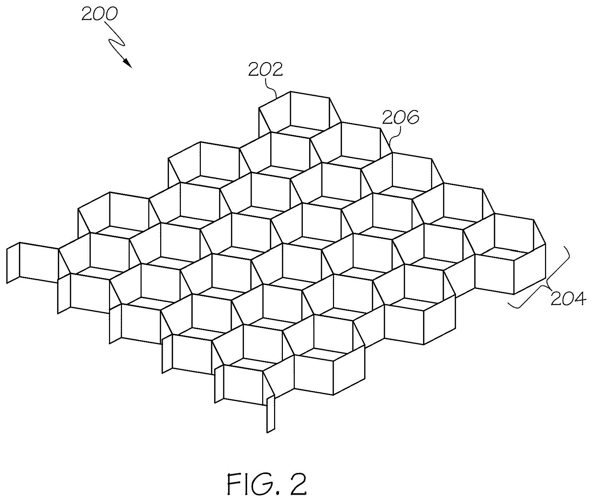

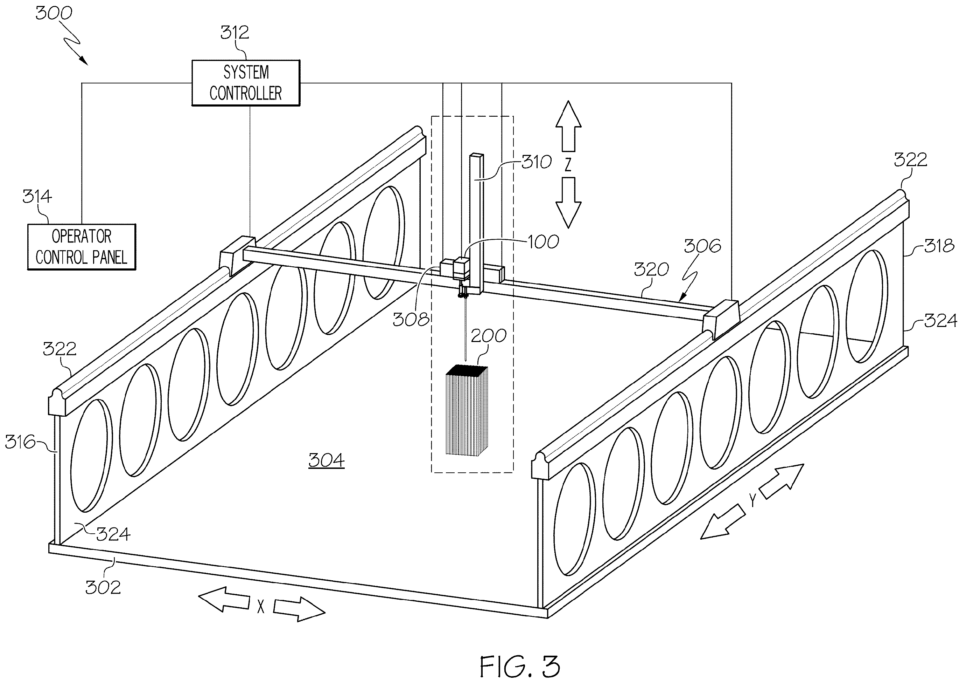

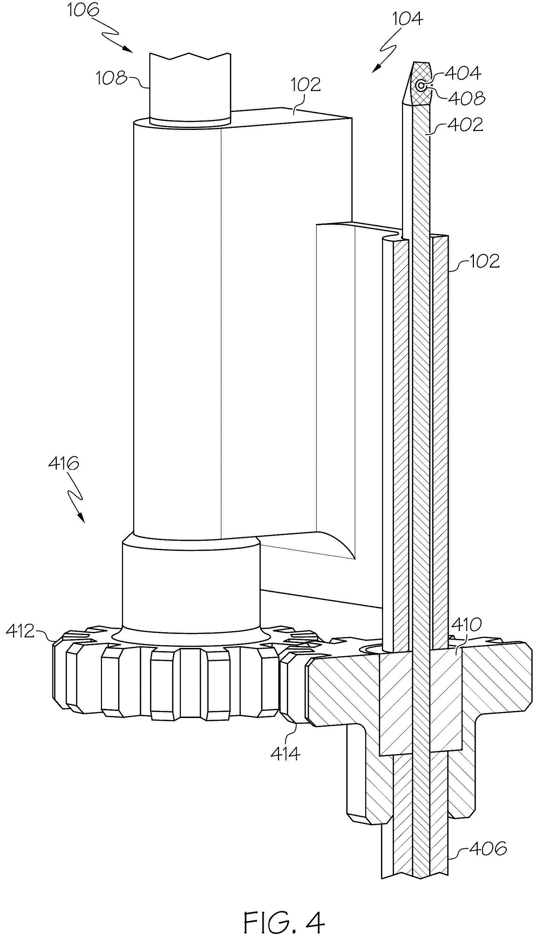

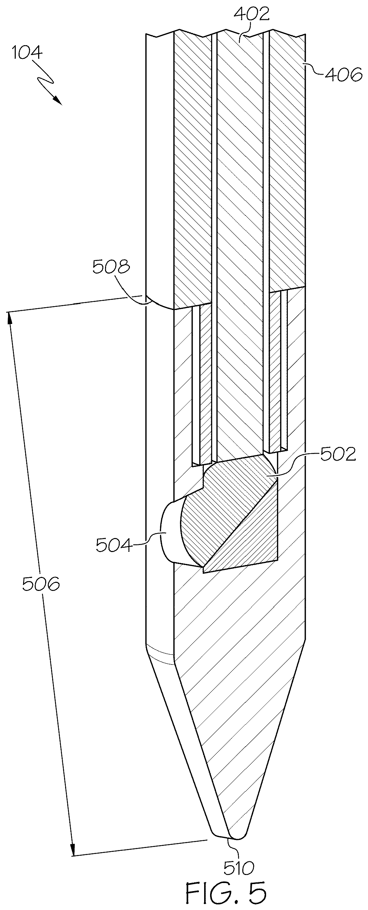

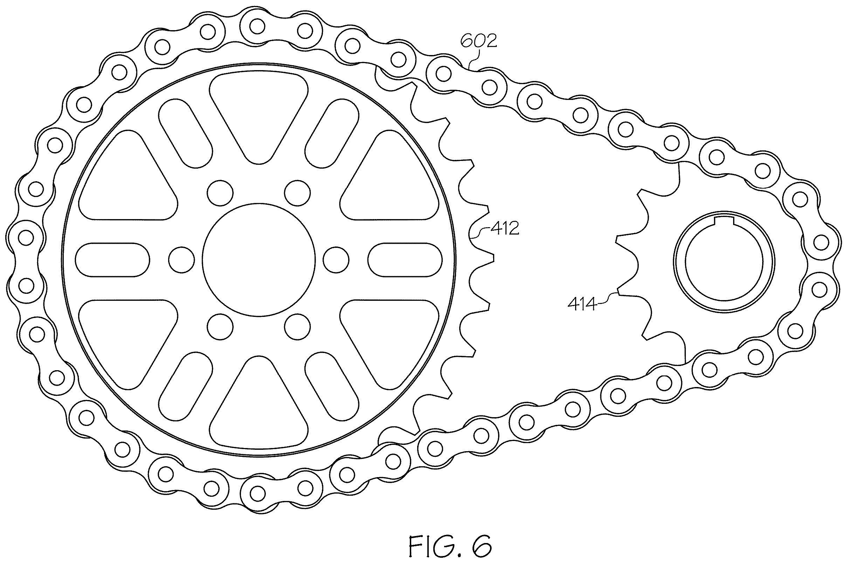

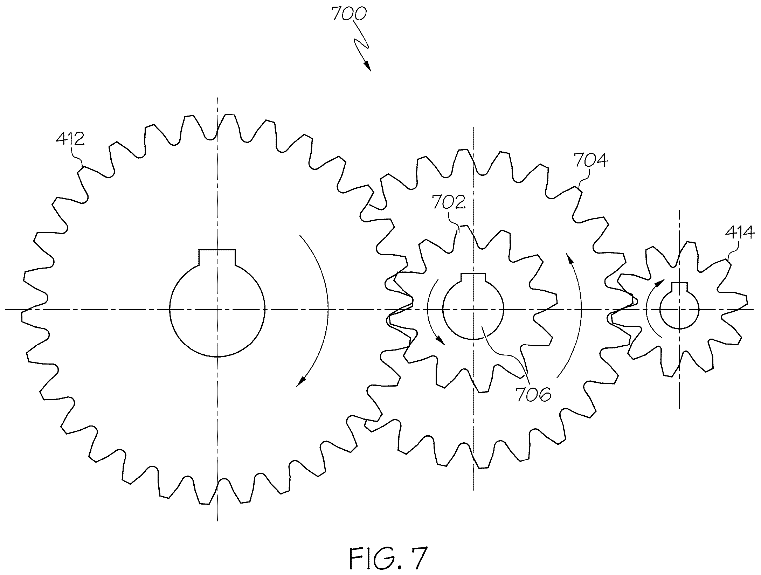

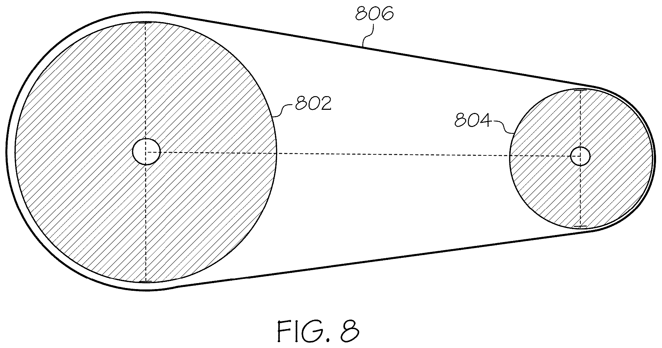

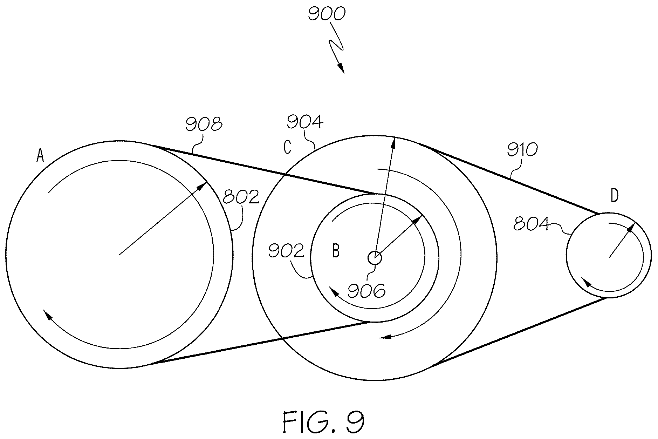

Referring generally to Figs. 1-9, by way of examples, the present disclosure is directed to a fiber laser machine tool 100 for modifying walls 202 of cells 204 in a honeycomb core structure 200. Fig. 1 is a functional block diagram of an example of the fiber laser machine tool 100. Fig. 2 is a perspective view of an example of a honeycomb core structure 200. Fig. 3 is a perspective view of an example of a manufacturing system 300 with the fiber laser machine tool 100 of Fig. 1. Fig. 4 is a perspective view of an example of a gear train 416 associated with a rotary actuator 106 and a fiber laser probe 104 in the fiber laser machine tool 100 of Fig. 1. Fig. 5 is a cross-sectional perspective view of an example of the fiber laser probe 104 in the fiber laser machine tool 100 of Fig. 1. Fig. 6 is a top view of an example of a drive gear 412, a follower gear 414 and a drive chain 602 associated with the rotary actuator 106 and the fiber laser probe 104 in another example of a fiber laser machine tool 100. Fig. 7 is a top view of another example of a gear train 700 associated with the rotary actuator 106 and the fiber laser probe 104 in yet another example of a fiber laser machine tool 100. Fig. 8 is a top view of an example of a drive pulley 802, a follower pulley 804 and a drive belt 806 associated with the rotary actuator 106 and the fiber laser probe 104 in yet another example of a fiber laser machine tool 100. Fig. 9 is a top view of an example of a belt train 900 associated with the rotary actuator 106 and the fiber laser probe 104 in still another example of a fiber laser machine tool 100.

With reference again to Figs. 1-9, in one or more example, a fiber laser machine tool 100 for modifying walls 202 of cells 204 in a honeycomb core structure 200 includes a mounting plate 102, a fiber laser probe 104 and a rotary actuator 106. The mounting plate 102 for mounting the fiber laser machine tool 100 to a manufacturing system 300 to enable movement of the fiber laser machine tool 100 in a vertical direction Z and a horizontal direction X, Y in relation to the honeycomb core structure 200 during operation of the manufacturing system 300. The fiber laser probe 104 includes an inner core 402 with a fiber optic conductor 404. The inner core 402 installed on the mounting plate 102 to prevent rotation of the fiber optic conductor 404, the fiber laser probe 104 also includes a rotational outer sheath 406 with a mirror 502 secured thereto for reflecting laser energy from the fiber optic conductor 404 toward a wall 202 of a cell 204 in the honeycomb core structure 200 to perforate a plurality of walls 202 of a plurality of cells 204 in the honeycomb core structure 200. The rotary actuator 106 installed on the mounting plate 102 and including a shaft 108 linked to the rotational outer sheath 406 of the fiber laser probe 104 to enable rotation of the mirror 502 during operation of the manufacturing system 300.

In another example of the fiber laser machine tool 100, the modifying of the walls 202 of the cells 204 includes perforating the walls 202 of the cells 204, cutting the walls 202 of the cells 204, cutting apertures in the walls 202 of the cells 204, cutting openings in the walls 202 of the cells 204, cutting pin holes in the walls 202 of the cells 204, cutting rounded slits in the walls 202 of the cells 204 or any other suitable type of modifying in any suitable combination. In yet another example of the fiber laser machine tool 100, the cells 204 include hexagonal-shaped cells, over-extended hexagonal-shaped cells, octagonal-shaped cells, triangular-shaped cells, rectangular-shaped cells, square-shaped cells, tubular-shaped cells, corrugated-shaped cells or any other suitable cell shape in any suitable combination. In still another example of the fiber laser machine tool 100, the honeycomb core structure 200 includes a non-metallic honeycomb core structure. In a further example, the non-metallic honeycomb core structure includes a non-metallic material, an aramid material, a polypropylene material, a polymer composite material, a thermoset material, a thermoplastic material, a fiberglass material, a carbon fiber reinforced material, an aramid paper reinforced material, a phenolic resin, a thermosetting resin, an epoxy resin, aromatic polyamide fibers, aramid fibers, meta-aramid fibers, para-aramid fibers, poly para-phenyleneterephthalamide fibers, nylon fibers, carbon fibers, glass fibers or any other suitable material in any suitable combination.

In still yet another example of the fiber laser machine tool 100, the cells 204 in the honeycomb core structure 200 have a width measuring approximately 1/8 inch, approximately 5/32 inch, approximately 3/16 inch, approximately 1/4 inch, approximately 3/8 inch or any other suitable width measurement in any suitable combination. In another example of the fiber laser machine tool 100, the cells 204 in the honeycomb core structure 200 have a density measuring approximately two (2) to twelve (12) pounds per cubic foot, approximately four (4) to ten (10) pounds per cubic foot, approximately six (6) to eight (8) pounds per cubic foot, approximately seven (7) pounds per cubic foot or any other suitable density measurement in any suitable combination. In yet another example of the fiber laser machine tool 100, the honeycomb core structure 200 has a height measuring approximately two (2) inches to three (3) feet, approximately six (6) inches to 2.5 feet, approximately twelve (12) inches to two (2) feet, approximately 18 inches or any other suitable height measurement in any suitable combination. In still another example of the fiber laser machine tool 100, the honeycomb core structure 200 has a width measuring approximately six (6) inches to four (4) feet, approximately twelve (12) inches to 3.5 feet, approximately 18 inches to 2.5 feet, approximately two (2) feet or any other suitable width measurement in any suitable combination. In still yet another example of the fiber laser machine tool 100, the honeycomb core structure 200 has a length measuring approximately six (6) inches to eight (8) feet, approximately twelve (12) inches to six (6) feet, approximately 18 inches to four (4) feet, approximately two (2) feet to three (3) feet or any other suitable length measurement in any suitable combination.

In another example of the fiber laser machine tool 100, the inner core 402 of the fiber laser probe 104 is fastened to the mounting plate 102 with the fiber optic conductor 404 within the inner core 402. In yet another example of the fiber laser machine tool 100, the fiber optic conductor 404 of the fiber laser probe 104 is encased in a fixed inner tube 408 within the inner core 402. In a further example, the fixed inner tube 408 of the fiber laser probe 104 is fastened to the mounting plate 102 with the fiber optic conductor 404 encased therein. In still another example of the fiber laser machine tool 100, the fiber laser probe 104 includes a carbon-dioxide laser. In still yet of the fiber laser machine tool 100, the fiber laser probe 104 also includes at least one bearing 410 received over the inner core 402 and the rotational outer sheath 406 to facilitate selective rotation of the rotational outer sheath 406 while the inner core 402 remains stationary. In another example of the fiber laser machine tool 100, the fiber laser probe 104 also includes an aperture 504 through the rotational outer sheath 406 and oriented toward the mirror 502 secured to the rotational outer sheath 406 such that the mirror 502 reflects laser energy from the fiber optic conductor 404 through the aperture 504 during operation of the manufacturing system 300. In yet another example of the fiber laser machine tool 100, the fiber laser probe 104 also includes a removable tip 506 having a taper from a proximal end 508 at the rotational outer sheath 406 to a distal end 510 at an end of fiber laser probe 104.

In still another example of the fiber laser machine tool 100, the rotary actuator 106 also includes a DC motor, a precision motor, a stepper motor, a servo motor or any other suitable type of rotary actuator in any suitable combination. In still yet another example of the fiber laser machine tool 100, the rotary actuator 106 includes a drive gear 412 coupled to the shaft 108 and the fiber laser probe 104 includes a follower gear 414 installed on the rotational outer sheath 406, the drive gear 412 engaged with the follower gear 414. In another example of the fiber laser machine tool 100, the rotary actuator 106 includes a drive gear 412 coupled to the shaft 108 and the fiber laser probe 104 includes a follower gear 414 installed on the rotational outer sheath 406. The drive gear 412 is coupled to the follower gear 414 via a drive chain 602. In yet another example of the fiber laser machine tool 100, the rotary actuator 106 includes a drive gear 412 coupled to the shaft 108 and a gear train 700 installed on the mounting plate 102. The gear train 700 including a first intermediate gear 702 engaged with the drive gear 412 and a second intermediate gear 704 engaged with the first intermediate gear 702 via a central shaft 706. The fiber laser probe 104 includes a follower gear 414 installed on the rotational outer sheath 406. The follower gear 414 engaged with the second intermediate gear 704.

In still another example of the fiber laser machine tool 100, the rotary actuator 106 includes a drive pulley 802 coupled to the shaft 108 and the fiber laser probe 104 includes a follower pulley 804 installed on the rotational outer sheath 406. The drive pulley 802 coupled to the follower pulley 804 via a drive belt 806. In still yet another example of the fiber laser machine tool 100, the rotary actuator 106 includes a drive pulley 802 coupled to the shaft 108 and a belt train 900 installed on the mounting plate 102. The belt train 900 includes a first intermediate pulley 902 and a second intermediate pulley 904 coupled to the first intermediate pulley 902 via a common shaft 906. The fiber laser probe 104 includes a follower pulley 804 installed on the rotational outer sheath 406. The drive pulley 802 is coupled to the first intermediate pulley 902 via a first drive belt 908 and the second intermediate pulley 904 is coupled to the follower pulley 804 via a second drive belt 910.

In another example, the fiber laser machine tool 100 also includes a fiber laser controller 109 and a rotary actuator controller 110. The fiber laser controller 109 in operative communication with the fiber laser probe 104 to control power to the fiber optic conductor 404 and to control parameters associated with the laser energy emitted from the fiber optic conductor 404 during operation of the manufacturing system 300. The rotary actuator controller 110 in operative communication with the rotary actuator 106 to control rotation of the rotational outer sheath 406 of the fiber laser probe 104 and the mirror 502 secured thereto during operation of the manufacturing system 300. In a further example, the fiber laser machine tool 100 also includes a fiber laser controller control panel 112 and a rotary actuator control panel 114. The fiber laser control panel 112 in operative communication with the fiber laser controller 109 for operator interaction with the fiber laser controller 109 and the fiber laser probe 104. The rotary actuator control panel 114 in operative communication with the rotary actuator controller 110 for operator interaction to control rotation of the rotary actuator 106 and the mirror 502.

Referring generally to Figs. 1-9, 14 and 15A-E, by way of examples, the present disclosure is directed to a manufacturing system 300 for modifying walls 202 of cells 204 in a honeycomb core structure 200. Fig. 1 is a functional block diagram of an example of a fiber laser machine tool 100. Fig. 2 is a perspective view of an example of a honeycomb core structure 200. Fig. 3 is a perspective view of the example of a manufacturing system 300 with the fiber laser machine tool 100 of Fig. 1. Fig. 4 is a perspective view of an example of a gear train 416 associated with a rotary actuator 106 and a fiber laser probe 104 in the fiber laser machine tool 100 of Fig. 1. Fig. 5 is a cross-sectional perspective view of an example of the fiber laser probe 104 in the fiber laser machine tool 100 of Fig. 1. Fig. 6 is a top view of an example of a drive gear 412, a follower gear 414 and a drive chain 602 associated with the rotary actuator 106 and the fiber laser probe 104 in another example of a fiber laser machine tool 100. Fig. 7 is a top view of another example of a gear train 700 associated with the rotary actuator 106 and the fiber laser probe 104 in yet another example of a fiber laser machine tool 100. Fig. 8 is a top view of an example of a drive pulley 802, a follower pulley 804 and a drive belt 806 associated with the rotary actuator 106 and the fiber laser probe 104 in yet another example of a fiber laser machine tool 100. Fig. 9 is a top view of an example of a belt train 900 associated with the rotary actuator 106 and the fiber laser probe 104 in still another example of a fiber laser machine tool 100.

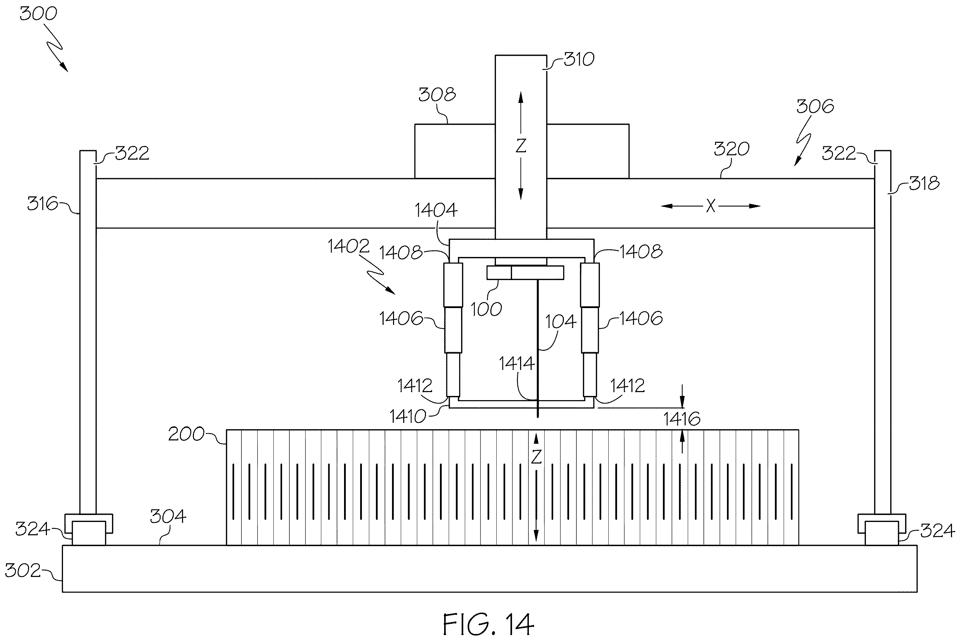

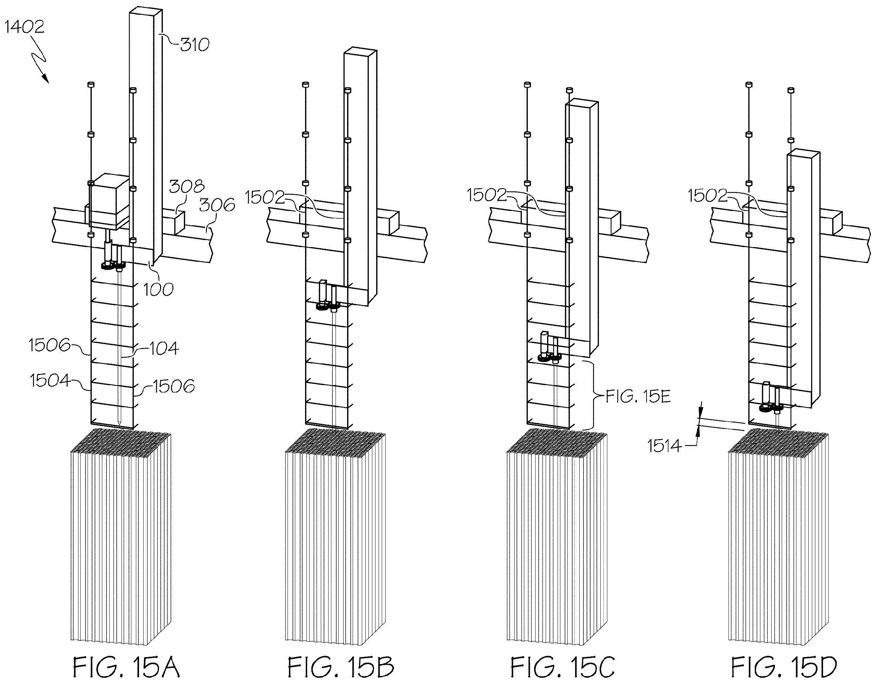

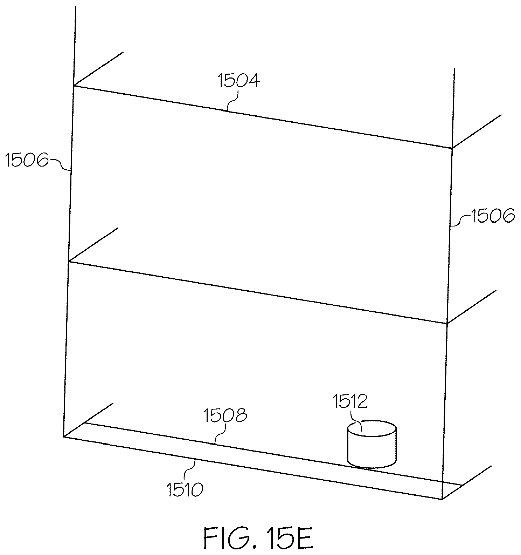

Fig. 14 is a side view of another example of a manufacturing system 300 with yet another example of a fiber laser machine tool 100. Fig. 15A is a perspective view of a portion of the manufacturing system 300 of Fig. 3 with the fiber laser machine tool 100 approaching an example of a honeycomb core structure 200. Fig. 15B is a perspective view of the portion of the manufacturing system 300 of Fig. 15A with the fiber laser probe 104 of the fiber laser machine tool 100 at a first vertical position within the example of the honeycomb core structure 200. Fig. 15C is a perspective view of the portion of the manufacturing system 300 of Fig. 15A with the fiber laser probe 104 of the fiber laser machine tool 100 at a second vertical position within the example of the honeycomb core structure 200. Fig. 15D is a perspective view of the portion of the manufacturing system 300 of Fig. 15A with the fiber laser probe 104 of the fiber laser machine tool 100 at a third vertical position within the example of the honeycomb core structure 200. Fig. 15E is a detail perspective view of a portion of an example of a guide assembly 1402 with a guide opening 1414 for the fiber laser probe 104 in the manufacturing system 300 of Figs. 15A-D.

With reference again to Figs. 1-5, 10-14, 15A-E and 16-22, in one or more example, a manufacturing system 300 for modifying walls 202 of cells 204 in a honeycomb core structure 200 includes a machine bed 302, a gantry 306, an X-carriage 308, a Z-head 310 and a fiber laser machine tool 100. The machine bed 302 with a work surface 304 for receiving and securing the honeycomb core structure 200. The gantry 306 includes a first vertical support member 316, a second vertical support member 318 and a horizontal cross member 320 spanning between distal portions 322 of the first vertical support member 316 and the second vertical support member 318. Proximal portions 324 of the first vertical support member 316 and the second vertical support member 318 being mounted on the machine bed 302 and rising above the honeycomb core structure 200. The gantry 306 movable in a Y-direction (Y) along the machine bed 302. The X-carriage 308 mounted on the gantry 306 above the honeycomb core structure 200. The X-carriage 308 movable along the horizontal cross member 320 of the gantry 306 in an X-direction (X) in relation to the machine bed 302. The Z-head 310 mounted on the X-carriage 308 above the honeycomb core structure 200 and movable in a Z-direction (Z) in relation to the work surface 304 and the honeycomb core structure 200. The fiber laser machine tool 100 mounted on the Z-head 310 and extending toward the work surface 304 in order to perforate a plurality of walls 202 of a plurality of cells 204 in the honeycomb core structure 200 during operation of the manufacturing system 300.

In another example of the manufacturing system 300, the modifying of the walls 202 of the cells 204 includes perforating the walls 202 of the cells 204, cutting the walls 202 of the cells 204, cutting apertures in the walls 202 of the cells 204, cutting openings in the walls 202 of the cells 204, cutting pin holes in the walls 202 of the cells 204, cutting rounded slits in the walls 202 of the cells 204 or any other suitable type of modifying in any suitable combination. In yet another example of the manufacturing system 300, the cells 204 include hexagonal-shaped cells, over-extended hexagonal-shaped cells, octagonal-shaped cells, triangular-shaped cells, rectangular-shaped cells, square-shaped cells, tubular-shaped cells, corrugated-shaped cells or any other suitable cell shape in any suitable combination.

In still another example of the manufacturing system 300, the honeycomb core structure 200 includes a non-metallic honeycomb core structure. In a further example, the non-metallic honeycomb core structure 200 includes a non-metallic material, an aramid material, a polypropylene material, a polymer composite material, a thermoset material, a thermoplastic material, a fiberglass material, a carbon fiber reinforced material, an aramid paper reinforced material, a phenolic resin, a thermosetting resin, an epoxy resin, aromatic polyamide fibers, aramid fibers, meta-aramid fibers, para-aramid fibers, poly para-phenyleneterephthalamide fibers, nylon fibers, carbon fibers, glass fibers or any other suitable material in any suitable combination. In still yet another example of the manufacturing system 300, the cells 204 in the honeycomb core structure 200 have a width measuring approximately 1/8 inch, approximately 5/32 inch, approximately 3/16 inch, approximately 1/4 inch, approximately 3/8 inch or any other suitable width measurement in any suitable combination. In another example of the manufacturing system 300, the cells 204 in the honeycomb core structure 200 have a density measuring approximately two (2) to twelve (12) pounds per cubic foot, approximately four (4) to ten (10) pounds per cubic foot, approximately six (6) to eight (8) pounds per cubic foot, approximately seven (7) pounds per cubic foot or any other suitable density measurement in any suitable combination.

In yet another example of the manufacturing system 300, the honeycomb core structure 200 has a height measuring approximately two (2) inches to three (3) feet, approximately six (6) inches to 2.5 feet, approximately twelve (12) inches to two (2) feet, approximately 18 inches or any other suitable height measurement in any suitable combination. In still another example of the manufacturing system 300, the honeycomb core structure 200 has a width measuring approximately six (6) inches to four (4) feet, approximately twelve (12) inches to 3.5 feet, approximately 18 inches to 2.5 feet, approximately two (2) feet or any other suitable width measurement in any suitable combination. In still yet another example of the manufacturing system 300, the honeycomb core structure 200 has a length measuring approximately six (6) inches to eight (8) feet, approximately twelve (12) inches to six (6) feet, approximately 18 inches to four (4) feet, approximately two (2) feet to three (3) feet or any other suitable length measurement in any suitable combination.

In another example of the manufacturing system 300, the work surface 304, the machine bed 302, the gantry 306, the X-carriage 308 and the fiber laser machine tool 100 are sized to fit the honeycomb core structure 200. In a further example, the work surface 304 and the machine bed 302 are sized to accommodate up to three (3) feet in height, up to four (4) feet in width and up to eight (8) feet in length for the honeycomb core structure 200. In another further example, the gantry 306 and the X-carriage 308 are sized to accommodate up to three (3) feet in height and up to four (4) feet in width for the honeycomb core structure 200. In yet another further example, the Z-head 310 and the fiber laser machine tool 100 are sized to accommodate up to three (3) feet in height for the honeycomb core structure 200.

In yet another example, the manufacturing system 300 also includes a system controller 312 in operative communication with the gantry 306, the X-carriage 308, the Z-head 310 and the fiber laser machine tool 100 to control power to the gantry 306, the X-carriage 308 and the Z-head 310 and to control parameters associated with controlling horizontal displacement and vertical displacement of the fiber laser machine tool 100 in relation to a plurality of cells 204 in the honeycomb core structure 200. In a further example, the manufacturing system 300 also includes an operator control panel 314 in operative communication with the system controller 312 for operator interaction with the gantry 306, the X-carriage 308 and the Z-head 310 to position the fiber laser machine tool 100 to a desired cell 204 of the plurality of cells 204 in the honeycomb core structure 200.

In still another example of the manufacturing system 300, the fiber laser machine tool 100 also includes a mounting plate 102, a fiber laser probe 104 and a rotary actuator 106. The mounting plate 102 mounting the fiber laser machine tool 100 to the Z-head 310 to enable movement of the fiber laser machine tool 100 in the Z-direction (Z) based on the Z-head 310, in the Y-direction (Y) based on the gantry 306 and in the X-direction (X) based on the X-carriage 308 during operation of the manufacturing system 300. The fiber laser probe 104 includes an inner core 402 with a fiber optic conductor 404. The inner core 402 installed on the mounting plate 102 to prevent rotation of the fiber optic conductor 404. The fiber laser probe 104 also includes a rotational outer sheath 406 with a mirror 502 secured thereto for reflecting laser energy from the fiber optic conductor 404 toward a select wall 202 of a select cell 204 in the honeycomb core structure 200 to perforate the plurality of walls 202 of the plurality of cells 204 in the honeycomb core structure 200. The rotary actuator 106 installed on the mounting plate 102 and including a shaft 108 linked to the rotational outer sheath 406 of the fiber laser probe 104 to enable rotation of the mirror 502 during operation of the manufacturing system 300. In a further example, the inner core 402 of the fiber laser probe 104 is fastened to the mounting plate 102 with the fiber optic conductor 404 within the inner core 402. In another further example, the fiber optic conductor 404 of the fiber laser probe 104 is encased in a fixed inner tube 408 within the inner core 402. In an even further example, the fixed inner tube 408 of the fiber laser probe 104 is fastened to the mounting plate 102 with the fiber optic conductor 404 encased therein. In yet another further example, the fiber laser probe 104 includes a carbon-dioxide laser. In still another further example, the fiber laser probe 104 also includes at least one bearing 410 received over the inner core 402 and the rotational outer sheath 406 to facilitate selective rotation of the rotational outer sheath 406 while the inner core 402 remains stationary. In still yet another further example, the fiber laser probe 104 also includes an aperture 504 through the rotational outer sheath 406 and oriented toward the mirror 502 secured to the rotational outer sheath 406 such that the mirror 502 reflects laser energy from the fiber optic conductor 404 through the aperture 504 during operation of the manufacturing system 300. In another further example, the fiber laser probe 104 also includes a removable tip 506 having a taper from a proximal end 508 at the rotational outer sheath 406 to a distal end 510 at an end of fiber laser probe 104.

In yet another further example, the rotary actuator 106 also includes a DC motor, a precision motor, a stepper motor, a servo motor or any other suitable actuator in any suitable combination. In still another further example, the rotary actuator 106 includes a drive gear 412 coupled to the shaft 108 and the fiber laser probe 104 includes a follower gear 414 installed on the rotational outer sheath 406. The drive gear 412 engaged with the follower gear 414. In still yet another further example, the rotary actuator 106 includes a drive gear 412 coupled to the shaft 108 and the fiber laser probe 104 includes a follower gear 414 installed on the rotational outer sheath 406. The drive gear 412 is coupled to the follower gear 414 via a drive chain 602. In another further example, the rotary actuator 106 includes a drive gear 412 coupled to the shaft 108 and a gear train 700 installed on the mounting plate 102. The gear train 700 including a first intermediate gear 702 engaged with the drive gear 412 and a second intermediate gear 704 engaged with the first intermediate gear 702 via a central shaft 706. The fiber laser probe 104 includes a follower gear 414 installed on the rotational outer sheath 406. The follower gear 414 engaged with the second intermediate gear 704. In yet another further example, the rotary actuator 106 includes a drive pulley 802 coupled to the shaft 108 and the fiber laser probe 104 includes a follower pulley 804 installed on the rotational outer sheath 406. The drive pulley 802 coupled to the follower pulley 804 via a drive belt 806. In still another further example, the rotary actuator 106 includes a drive pulley 802 coupled to the shaft 108 and a belt train 900 installed on the mounting plate 102. The belt train 900 including a first intermediate pulley 902 and a second intermediate pulley 904 coupled to the first intermediate pulley 902 via a common shaft 906. The fiber laser probe 104 includes a follower pulley 804 installed on the rotational outer sheath 406. The drive pulley 802 is coupled to the first intermediate pulley 902 via a first drive belt 908 and the second intermediate pulley 904 is coupled to the follower pulley 804 via a second drive belt 910.

In still yet another further example, manufacturing system 300 also includes a system controller 312 in operative communication with the gantry 306, the X-carriage 308, the Z-head 310 and the fiber laser machine tool 100 to control power to the gantry 306, the X-carriage 308 and the Z-head 310 and to control parameters associated with controlling horizontal displacement and vertical displacement of the fiber laser machine tool 100 in relation to a plurality of cells 204 in the honeycomb core structure 200. The system controller 312 also in operative communication with the fiber laser probe 104 to control power to the fiber optic conductor 404 and to control parameters associated with the laser energy emitted from the fiber optic conductor 404 during operation of the manufacturing system 300. The system controller 312 also in operative communication with the rotary actuator 106 to control rotation of the rotational outer sheath 406 of the fiber laser probe 104 and the mirror 502 secured thereto during operation of the manufacturing system 300. In an even further example, the manufacturing system 300 also includes an operator control panel 314 in operative communication with the system controller 312 for operator interaction with the gantry 306, the X-carriage 308 and the Z-head 310 to position the fiber laser machine tool 100 to a desired cell 204 of the plurality of cells 204 in the honeycomb core structure 200. The operator control panel 314 also in operative communication with the system controller 312 for operator interaction with the system controller 312 and the fiber laser probe 104. The operator control panel 314 also in operative communication with the system controller 312 for operator interaction to control rotation of the rotary actuator 106 and the mirror 502. In another further example, the manufacturing system 300 also includes a guide assembly 1402 mounted on the Z-head 310 or the X-carriage 308 to stabilize the fiber laser machine tool 100 as it is moved vertically toward and away from the honeycomb core structure 200 secured to the work surface 304 of the machine bed 302 in conjunction with movement of the Z-head 310 in the Z-direction (Z).

In one example, the guide assembly 1402 is mounted on the Z-head 310 (see Fig. 14). In this example, the guide assembly 1402 includes a mounting plate 1404, at least two (2) guideposts 1406 and a guide plate 1410. The mounting plate 1404 mounting the guide assembly 1402 to the Z-head 310 to enable movement of the guide assembly 1402 in the Z-direction (Z) based on the Z-head 310, in the Y-direction (Y) based on the gantry 306 and in the X-direction (X) based on the X-carriage 308 during operation of the manufacturing system 300. The at least two (2) (2) guideposts 1406 having proximal ends 1408 attached to the mounting plate 1404 and extending vertically toward the work surface 304 of the machine bed 302. Each guidepost 1406 fabricated to adjustably telescope from the mounting plate 1404 toward the work surface 304 and vice versa. The guide plate 1410 attached to distal ends 1412 of the at least two (2) guideposts 1406. The guide plate 1410 including a guide opening 1414 aligned with the fiber laser probe 104 of the fiber laser machine tool 100 such that the fiber laser probe 104 passes through the guide opening 1414 to stabilize the fiber laser probe 104 during operation of the manufacturing system 300.

In another example of the manufacturing system 300, the guide plate 1410 of the guide assembly 1402 is adjustable for vertical positioning to a reference position 1416 above a top 206 of the honeycomb core structure 200 prior to operation of the fiber laser machine tool 100. In a further example, the reference position 1416 includes a predetermined distance away from the top 206 of the honeycomb core structure 200. In an even further example, the predetermined distance includes approximately 1/2 inch to approximately three (3) inches, approximately 3/4 inch to approximately 2-1/2 inches, approximately one (1) inch to approximately two (2) inches, approximately 1-1/4 inch to approximately 1-3/4 inches, approximately 1-1/2 inch or any other suitable distance.

In yet another example of the manufacturing system 300, during operation of the fiber laser machine tool 100, the guide plate 1410 of the guide assembly 1402 is vertically adjustable for movement from the reference position 1416 toward the Z-head 310 and back to the reference position 1416 as the Z-head 310 moves toward and away from the honeycomb core structure 200 and as the fiber laser probe 104 correspondingly moves vertically through the guide opening 1414 within the select cell 204 of the honeycomb core structure 200 for perforation. In a further example, the vertical positioning of the guide plate 1410 from the reference position 1416 toward the Z-head 310 and back to the reference position 1416 is inverse to vertical positioning of the Z-head 310 and the fiber laser probe 104 of the fiber laser machine tool 100 during operation of the manufacturing system 300.

In another example, the guide assembly 1402 is mounted on the X-carriage 308 (see Figs. 15A-E). In this example, the guide assembly 1402 includes at least two (2) mounting brackets 1502, a guide framework 1504 and a guide bar 1508. The at least two (2) mounting brackets 1502 adjustably mounting the guide assembly 1402 to the X-carriage 180 to enable movement of the guide assembly 1402 in the Y-direction (Y) based on the gantry 306 and in the X-direction (X) based on the X-carriage 308 during operation of the manufacturing system 300. The guide framework 1504 having at least two (2) vertical frame bars 1506 adjustably held by the at least two (2) mounting brackets 1502 and extending vertically toward the work surface 304 of the machine bed 302. The guide bar 1508 is attached to a distal end 1510 of the guide framework 1504. The guide bar 1508 including a guide tube 1512 aligned with the fiber laser probe 104 of the fiber laser machine tool 100 such that the fiber laser probe 104 passes through the guide tube 1512 to stabilize the fiber laser probe 104 during operation of the manufacturing system 300.

In another example of the manufacturing system 300, the guide framework 1504 of the guide assembly 1402 is adjustable for vertical positioning of the distal end 1510 to a reference position 1514 above a top 206 of the honeycomb core structure 200 prior to operation of the fiber laser machine tool 100. In a further example, the reference position 1514 includes a predetermined distance away from the top 206 of the honeycomb core structure 200. In an even further example, the predetermined distance includes approximately 1/2 inch to approximately three (3) inches, approximately 3/4 inch to approximately 2-1/2 inches, approximately one (1) inch to approximately two (2) inches, approximately 1-1/4 inch to approximately 1-3/4 inches, approximately 1-1/2 inch or any other suitable distance. In yet another example of the manufacturing system 300, during operation of the fiber laser machine tool 100, the guide bar 1508 of the guide assembly 1402 remains stationary at the reference position 1514 as the Z-head 310 moves toward and away from the honeycomb core structure 200 and as the fiber laser probe 104 correspondingly moves vertically through the guide tube 1512 within the select cell 204 of the honeycomb core structure 200 for perforation.

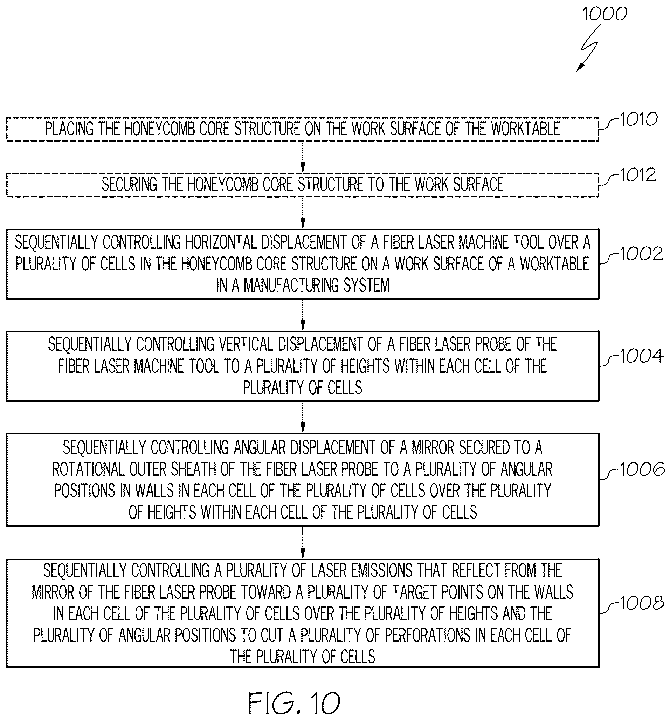

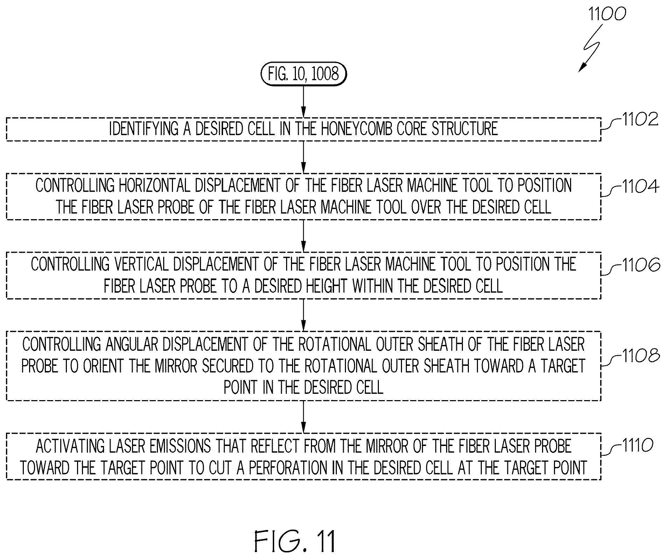

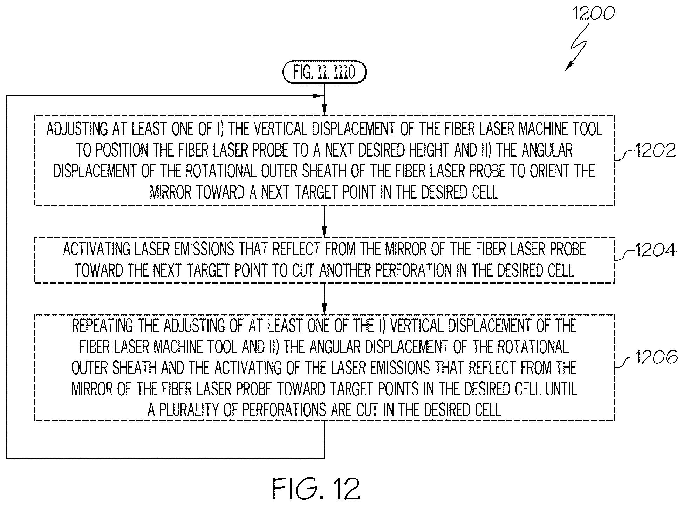

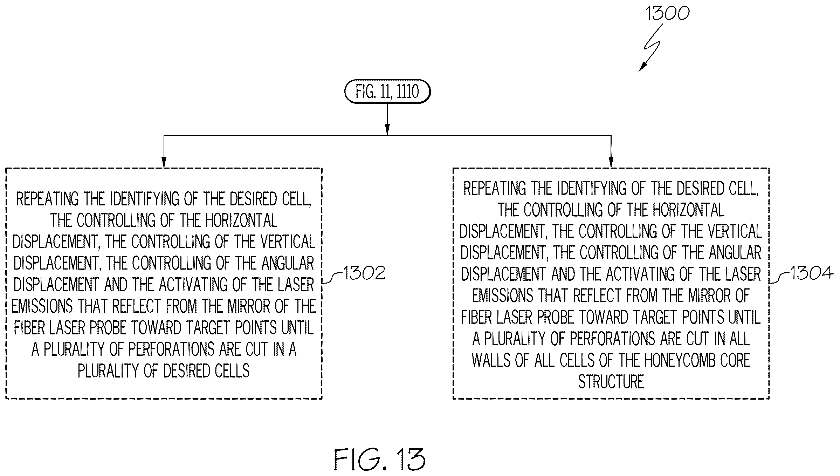

Referring generally to Figs. 1-5, 10-14, 15A-E and 16-22, by way of examples, the present disclosure is directed to a method 1000, 1100, 1200, 1300, 1600, 2600 for modifying walls 202 of cells 204 in a honeycomb core structure 200. Fig. 1 is a functional block diagram of an example of a fiber laser machine tool 100. Fig. 2 is a perspective view of an example of a honeycomb core structure 200. Fig. 3 is a perspective view of the example of a manufacturing system 300 with the fiber laser machine tool 100 of Fig. 1. Fig. 4 is a perspective view of an example of a gear train 416 associated with a rotary actuator 106 and a fiber laser probe 104 in the fiber laser machine tool 100 of Fig. 1. Fig. 5 is a cross-sectional perspective view of an example of the fiber laser probe 104 in the fiber laser machine tool 100 of Fig. 1. Fig. 10 provides an example of the method 1000 for modifying walls 202 of cells 204 in a honeycomb core structure 200. Fig. 11, in combination with Fig. 10, provides an example of the method 1100 for modifying walls 202 of cells 204 in a honeycomb core structure 200. Fig. 12, in combination with Figs. 10 and 11, provides an example of the method 1200 for modifying walls 202 of cells 204 in a honeycomb core structure 200. Fig. 13, in combination with Figs. 10 and 11, provides an example of the method 1300 for modifying walls 202 of cells 204 in a honeycomb core structure 200.

Fig. 14 is a side view of another example of a manufacturing system 300 with yet another example of a fiber laser machine tool 100. Fig. 15A is a perspective view of a portion of the manufacturing system 300 of Fig. 3 with the fiber laser machine tool 100 approaching an example of a honeycomb core structure 200. Fig. 15B is a perspective view of the portion of the manufacturing system 300 of Fig. 15A with the fiber laser probe 104 of the fiber laser machine tool 100 at a first vertical position within the example of the honeycomb core structure 200. Fig. 15C is a perspective view of the portion of the manufacturing system 300 of Fig. 15A with the fiber laser probe 104 of the fiber laser machine tool 100 at a second vertical position within the example of the honeycomb core structure 200. Fig. 15D is a perspective view of the portion of the manufacturing system 300 of Fig. 15A with the fiber laser probe 104 of the fiber laser machine tool 100 at a third vertical position within the example of the honeycomb core structure 200. Fig. 15E is a detail perspective view of a portion of an example of a guide assembly 1402 with a guide opening 1414 for the fiber laser probe 104 in the manufacturing system 300 of Figs. 15A-D.

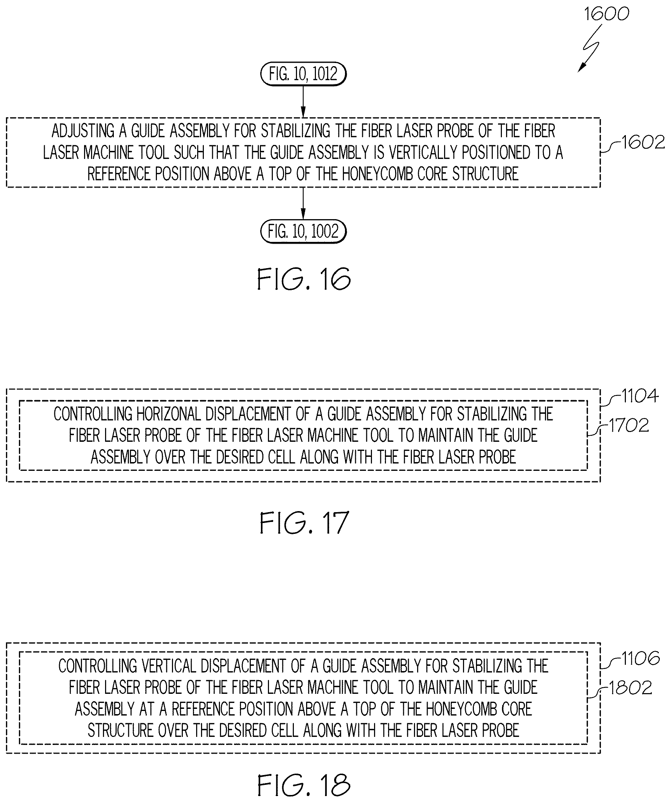

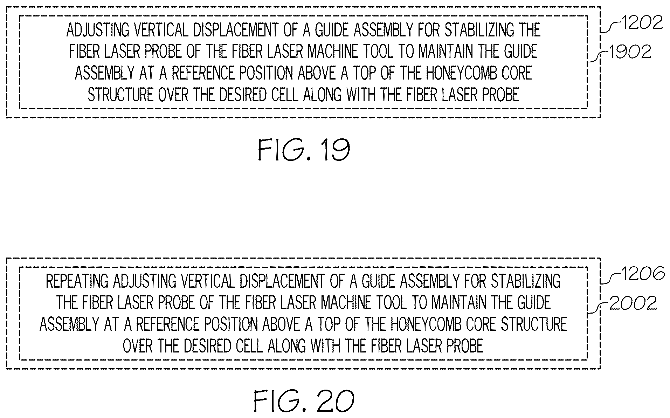

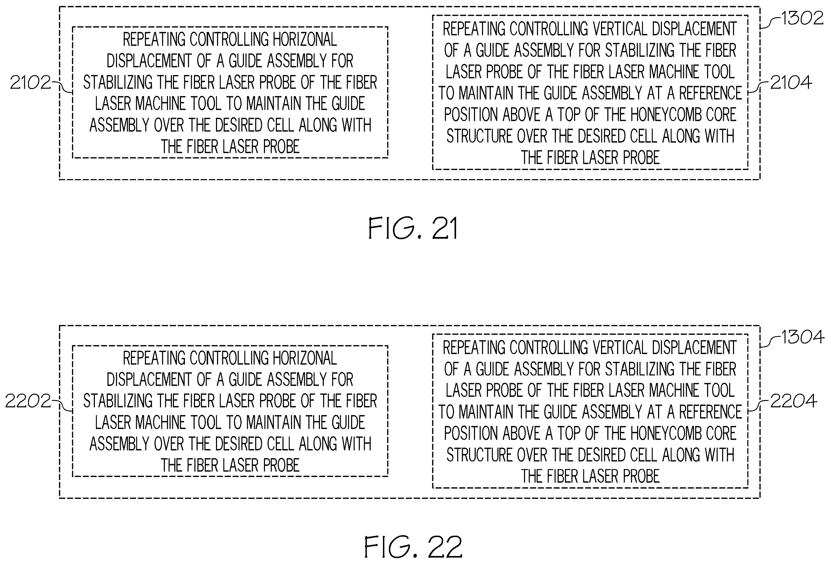

Fig. 16, in combination with Fig. 10, provides an example of the method 1600 for modifying walls 202 of cells 204 in a honeycomb core structure 200. Fig. 17 provides an example of the controlling 1104 of the horizontal displacement in the method 1100 of Fig. 11. Fig. 18 provides an example of the controlling 1106 of the vertical displacement in the method 1100 of Fig. 11. Fig. 19 provides an example of the adjusting 1202 of the vertical displacement in the method 1200 of Fig. 12. Fig. 20 provides an example of the repeating 1206 of the adjusting 1202 of the vertical displacement in the method 1200 of Fig. 12. Fig. 21 provides an example of the repeating 1302 of the controlling 1104 of the horizontal displacement and the repeating 1302 of the controlling 1106 of the vertical displacement in the method 1300 of Fig. 13 in conjunction with cutting perforations in a plurality of cells 204 of a honeycomb core structure 200. Fig. 22 is a flow diagram of an example of the repeating 1304 of the controlling 1104 of the horizontal displacement and the repeating 1304 of the controlling of the vertical displacement in the method of Fig. 13 in conjunction with cutting perforations in all cells 204 of a honeycomb core structure 200.

With reference again to Figs. 1-5 and 10, in one or more example, a method 1000 (see Fig. 10) for modifying walls 202 of cells 204 in a honeycomb core structure 200 includes sequentially controlling 1002 horizontal displacement of a fiber laser machine tool 100 over a plurality of cells 204 in the honeycomb core structure 200 on a work surface 304 of a machine bed 302 in a manufacturing system 300. At 1004, vertical displacement of a fiber laser probe 104 of the fiber laser machine tool 100 is sequentially controlled to a plurality of heights within each cell 204 of the plurality of cells 204. The fiber laser probe 104 includes an inner core 402 with a fiber optic conductor 404. At 1006, angular displacement of a mirror 502 secured to a rotational outer sheath 406 of the fiber laser probe 104 is sequentially controlled to a plurality of angular positions in walls 202 in each cell 204 of the plurality of cells 204 over the plurality of heights within each cell 204 of the plurality of cells 204. At 1008, a plurality of laser emissions that reflect from the mirror 502 of the fiber laser probe 104 are sequentially controlled toward a plurality of target points on the walls 202 in each cell 204 of the plurality of cells 204 over the plurality of heights and the plurality of angular positions to cut a plurality of perforations in each cell 204 of the plurality of cells 204. In another example, the method 1000 also includes placing 1010 the honeycomb core structure 200 on the work surface 304 of the machine bed 302. At 1012, the honeycomb core structure 200 is secured to the work surface 304. In this example, the method 1000 continues from 1012 to 1002.

With reference again to Figs. 1, 2, 10, 14, 15A-E and 16, in one or more example, a method 1600 (see Fig. 16) for modifying walls 202 of cells 204 in a honeycomb core structure 200 includes the method 1000 of Fig. 10 and continues from 1012 to 1602 where a guide assembly 1402 for stabilizing the fiber laser probe 104 of the fiber laser machine tool 100 is adjusted such that the guide assembly 1402 is vertically positioned to a reference position 1416, 1514 above a top 206 of the honeycomb core structure 200. In this example, the method 1600 continues from 1602 to 1002.

With reference again to Figs. 1, 2, 4, 5, 10, 11, 14, 15A-E, 17 and 18, in one or more example, a method 1100 (see Fig. 11) for modifying walls 202 of cells 204 in a honeycomb core structure 200 includes the method 1000 of Fig. 10 and continues from 1008 to 1102 where a desired cell 204 in the honeycomb core structure 200 is identified. At 1104, horizontal displacement of the fiber laser machine tool 100 is controlled to position the fiber laser probe 104 of the fiber laser machine tool 100 over the desired cell 204. At 1106, vertical displacement of the fiber laser machine tool 100 is controlled to position the fiber laser probe 104 to a desired height within the desired cell 204. At 1108, angular displacement of the rotational outer sheath 406 of the fiber laser probe 104 is controlled to orient the mirror 502 secured to the rotational outer sheath 406 toward a target point in the desired cell 204. At 1110, laser emissions that reflect from the mirror 502 of the fiber laser probe 104 are activated toward the target point to cut a perforation in the desired cell 204 at the target point.

In another example of the method 1100, the laser emissions are activated at a predetermined power level for a predetermined duration. In a further example, the predetermined duration includes approximately two (2) to 20 milliseconds, approximately four (4) to 16 milliseconds, approximately six (6) to twelve (12) milliseconds, approximately eight (8) milliseconds or any other suitable duration. In yet another example of the method 1100, the perforation includes a predetermined shape and a predetermined major dimension. In a further example, the predetermined shape includes a circular shape, an oval shape, an oblong shape, an elliptical shape or any other suitable shape in any suitable combination. In another further example, the predetermined major dimension includes approximately five (5) to 50 thousandths inch, approximately ten (10) to 40 thousandths inch, approximately 15 to 30 thousandths inch, approximately 20 thousandths inch or any other suitable major dimension.

In still another example of the method 1100, the controlling 1104 of the horizontal displacement includes controlling 1702 (see Fig. 17) horizonal displacement of a guide assembly 1402 for stabilizing the fiber laser probe 104 of the fiber laser machine tool 100 to maintain the guide assembly 1402 over the desired cell 204 along with the fiber laser probe 104.

In still yet another example of the method 1100, the controlling 1106 of the vertical displacement includes controlling 1802 (see Fig. 18) vertical displacement of a guide assembly 1402 for stabilizing the fiber laser probe 104 of the fiber laser machine tool 100 to maintain the guide assembly 1402 at a reference position 1416, 1514 above a top 206 of the honeycomb core structure 200 over the desired cell 204 along with the fiber laser probe 104. In a further example, the vertical displacement of the guide assembly 1402 is inverse to the vertical displacement of the fiber laser machine tool 100.

With reference again to Figs. 1, 2, 4, 5, 10-12, 14, 15A-E, 19 and 20, in one or more example, a method 1200 (see Fig. 12) for modifying walls 202 of cells 204 in a honeycomb core structure 200 includes the method 1000 of Fig. 10 and the method 1100 of Fig. 11 and continues from 1110 to 1202 where at least one of i) the vertical displacement of the fiber laser machine tool 100 is adjusted to position the fiber laser probe 104 to a next desired height and ii) the angular displacement of the rotational outer sheath 406 of the fiber laser probe 104 is adjusted to orient the mirror 502 toward a next target point in the desired cell 204. At 1204, laser emissions are activated for reflection from the mirror 502 of the fiber laser probe 104 toward the next target point to cut another perforation in the desired cell 204.

In another example of the method 1200, the adjusting 1202 of the vertical displacement includes adjusting 1902 (see Fig. 19) vertical displacement of a guide assembly 1402 for stabilizing the fiber laser probe 104 of the fiber laser machine tool 100 to maintain the guide assembly 1402 at a reference position 1416, 1514 above a top 206 of the honeycomb core structure 200 over the desired cell 204 along with the fiber laser probe 104. In a further example, the vertical displacement of the guide assembly 1402 is inverse to the vertical displacement of the fiber laser machine tool 100.

In yet another example of the method 1200, the adjusting 1202 of the vertical displacement includes moving the fiber laser machine tool 100 up or down a predetermined distance. In a further example, the predetermined distance includes approximately one-fourth inch to four (4) inches, approximately one-half inch to three (3) inches, approximately three-fourths inch to two (2) inches, approximately one (1) inch or any other suitable distance. In still another example of the method 1200, the adjusting 1202 of the angular displacement includes moving the rotational outer sheath 406 of the fiber laser probe 104 left or right by a predetermined angle in relation to a central z-axis for the fiber laser probe 104. In a further example, the predetermined angle includes approximately 30 degrees, approximately 45 degrees, approximately 60 degrees, approximately 120 degrees or any other suitable angle. In still yet another example, the method 1200 also includes repeating 1206 the adjusting 1202 of at least one of i) the vertical displacement of the fiber laser machine tool 100 and ii) the angular displacement of the rotational outer sheath 406 and the activating 1204 of the laser emissions that reflect from the mirror 502 of the fiber laser probe 104 toward target points in the desired cell 204 until a plurality of perforations are cut in the desired cell 204.

In a further example, the repeating 1206 of the adjusting of the vertical displacement includes repeating 2002 (see Fig. 22) the adjusting 1202 of the vertical displacement of a guide assembly 1402 for stabilizing the fiber laser probe 104 of the fiber laser machine tool 100 to maintain the guide assembly 1402 at a reference position 1416, 1514 above a top 206 of the honeycomb core structure 200 over the desired cell 204 along with the fiber laser probe 104. In an even further example, the vertical displacement of the guide assembly 1402 is inverse to the vertical displacement of the fiber laser machine tool 100.

With reference again to Figs. 1, 2, 5, 10, 11 and 13, in one or more example, a method 1300 (see Fig. 13) for modifying walls 202 of cells 204 in a honeycomb core structure 200 includes the method 1000 of Fig. 10 and the method 1100 of Fig. 11 and continues from 1110 to 1302 for repeating 1302 the identifying 1102 of the desired cell 204, the controlling 1104 of the horizontal displacement, the controlling 1106 of the vertical displacement, the controlling 1108 of the angular displacement and the activating 1110 of the laser emissions that reflect from the mirror 502 of the fiber laser probe 104 toward target points until a plurality of perforations are cut in a plurality of desired cells 204.

In another example of the method 1300, the repeating 1302 of the controlling of the horizontal displacement includes repeating 2102 (see Fig. 21) controlling of the horizonal displacement of a guide assembly 1402 for stabilizing the fiber laser probe 104 of the fiber laser machine tool 100 to maintain the guide assembly 1402 over the desired cell 204 along with the fiber laser probe 104. In yet another example of the method 1300, the repeating 1302 of the controlling of the vertical displacement includes repeating 2104 controlling of the vertical displacement of a guide assembly 1402 for stabilizing the fiber laser probe 104 of the fiber laser machine tool 100 to maintain the guide assembly 1402 at a reference position 1416, 1514 above a top 206 of the honeycomb core structure 200 over the desired cell 204 along with the fiber laser probe 104. In a further example, the vertical displacement of the guide assembly 1402 is inverse to the vertical displacement of the fiber laser machine tool 100. In still another example, the method 1300 also includes repeating 1304 the identifying 1102 of the desired cell 204, the controlling 1104 of the horizontal displacement, the controlling 1106 of the vertical displacement, the controlling 1108 of the angular displacement and the activating 1110 of the laser emissions that reflect from the mirror 502 of the fiber laser probe 104 toward target points until a plurality of perforations are cut in all walls 202 of all cells 204 of the honeycomb core structure 200.

In a further example, the repeating 1304 of the controlling of the horizontal displacement includes repeating 2202 (see Fig. 22) controlling of the horizonal displacement of a guide assembly 1402 for stabilizing the fiber laser probe 104 of the fiber laser machine tool 100 to maintain the guide assembly 1402 over the desired cell 204 along with the fiber laser probe 104. In another further example, the repeating 1304 of the controlling 1106 of the vertical displacement of the fiber laser machine tool 100 includes repeating 2204 controlling of the vertical displacement of a guide assembly 1402 for stabilizing the fiber laser probe 104 of the fiber laser machine tool 100 to maintain the guide assembly 1402 at a reference position 1416, 1514 above a top 206 of the honeycomb core structure 200 over the desired cell 204 along with the fiber laser probe 104. In an even further example, the vertical displacement of the guide assembly 1402 is inverse to the vertical displacement of the fiber laser machine tool 100.

Examples of fiber laser machine tools 100, manufacturing systems 300 and methods 1000, 1100, 1200, 1300, 1600, 2600 for modifying walls 202 of cells 204 in honeycomb core structures 200 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more example," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two (2) of item A, one of item B and ten (10) of item C; four (4) of item B and seven of item C; and other suitable combinations. As used herein, the term "and/or" and the "/" symbol includes any and all combinations of one or more of the associated listed items.

As used herein, the terms "coupled," "coupling," and similar terms refer to two (2) or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1-9, 14 and 15A-E, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1-9, 14 and 15A-E, referred to above, need be included in every example and not all elements, features and/or components described herein are necessarily depicted in each illustrative example. Accordingly, some of the elements, features and/or components described and illustrated in Figs. 1-9, 14 and 15A-E may be combined in various ways without the need to include other features described and illustrated in Figs. 1-9, 14 and 15A-E, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1-9, 14 and 15A-E, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1-9, 14 and 15A-E and such elements, features and/or components may not be discussed in detail herein with reference to each of Figs. 1-9, 14 and 15A-E. Similarly, all elements, features and/or components may not be labeled in each of Figs. 1-9, 14 and 15A-E, but reference numerals associated therewith may be utilized herein for consistency.

In Figs. 10-13 and 16-22, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 10-13 and 16-22 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need to be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

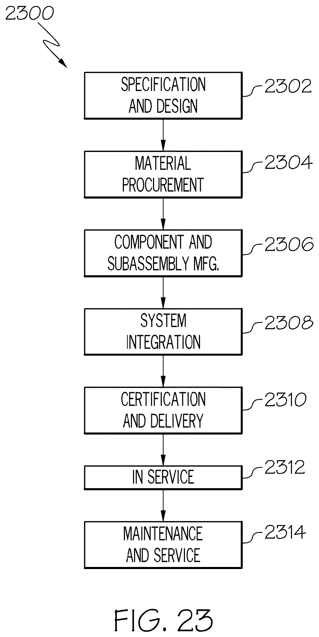

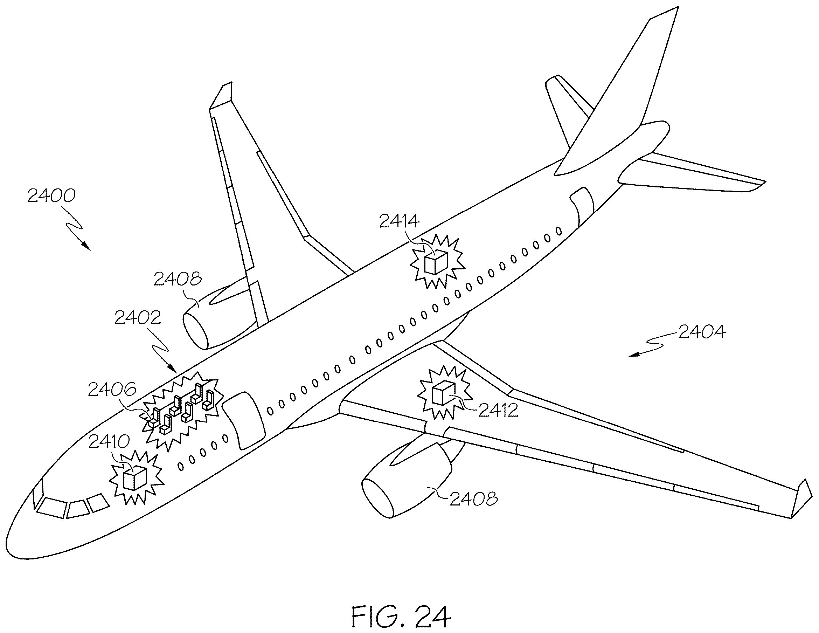

Examples of the subject matter disclosed herein may be described in the context of aircraft manufacturing and service method 2300 as shown in Fig. 23 and aircraft 2400 as shown in Fig. 24. In one or more example, the disclosed fiber laser machine tools 100, manufacturing systems 300 and methods 1000, 1100, 1200, 1300, 1600, 2600 for modifying walls 202 of cells 204 in honeycomb core structures 200 may be used in aircraft manufacturing. During pre-production, the service method 2300 may include specification and design (block 2302) of aircraft 2400 and material procurement (block 2304). During production, component and subassembly manufacturing (block 2306) and system integration (block 2308) of aircraft 2400 may take place. Thereafter, aircraft 2400 may go through certification and delivery (block 2310) to be placed in service (block 2312). While in service, aircraft 2400 may be scheduled for routine maintenance and service (block 2314). Routine maintenance and service may include modification, reconfiguration, refurbishment, etc. of one or more systems of aircraft 2400.

Each of the processes of the service method 2300 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 24, aircraft 2400 produced by the service method 2300 may include airframe 2402 with a plurality of high-level systems 2404 and interior 2406. Examples of high-level systems 2404 include one or more of propulsion system 2408, electrical system 2410, hydraulic system 2412 and environmental system 2414. Any number of other systems may be included. Although an aerospace example is shown, the principles disclosed herein may be applied to other industries, such as the automotive industry. Accordingly, in addition to aircraft 2400, the principles disclosed herein may apply to other vehicles, e.g., land vehicles, marine vehicles, space vehicles, etc.

The disclosed fiber laser machine tools 100, manufacturing systems 300 and methods 1000, 1100, 1200, 1300, 1600, 2600 for modifying walls 202 of cells 204 in honeycomb core structures 200 may be employed during any one or more of the stages of the manufacturing and service method 2300. For example, components or subassemblies corresponding to component and subassembly manufacturing (block 2306) may be fabricated or manufactured in a manner similar to components or subassemblies produced while aircraft 2400 is in service (block 2312). Also, one or more example of the system(s), method(s), or combination thereof may be utilized during production stages (block 2306 and block 2308), for example, by substantially expediting assembly of or reducing the cost of aircraft 2400. Similarly, one or more example of the system or method realizations, or a combination thereof, may be utilized, for example and without limitation, while aircraft 2400 is in service (block 2312) and/or during maintenance and service (block 2314).

Further examples are set out in the clause below:
1. A fiber laser machine tool for modifying walls of cells in a honeycomb core structure, the fiber laser machine tool comprising:
   a mounting plate for mounting the fiber laser machine tool to a manufacturing system to enable movement of the fiber laser machine tool in a vertical direction and a horizontal direction in relation to the honeycomb core structure during operation of the manufacturing system;
   a fiber laser probe comprising an inner core with a fiber optic conductor, the inner core installed on the mounting plate to prevent rotation of the fiber optic conductor, the fiber laser probe further comprising a rotational outer sheath with a mirror secured thereto for reflecting laser energy from the fiber optic conductor toward a wall of a cell in the honeycomb core structure to perforate a plurality of walls of a plurality of cells in the honeycomb core structure; and
   a rotary actuator installed on the mounting plate and comprising a shaft linked to the rotational outer sheath of the fiber laser probe to enable rotation of the mirror during operation of the manufacturing system.
2. The fiber laser machine tool of Clause 1 wherein the modifying of the walls of the cells comprises at least one of perforating the walls of the cells, cutting the walls of the cells, cutting apertures in the walls of the cells, cutting openings in the walls of the cells, cutting pin holes in the walls of the cells and cutting rounded slits in the walls of the cells.
3. The fiber laser machine tool of Clause 1 wherein the cells comprise at least one of hexagonal-shaped cells, over-extended hexagonal-shaped cells, octagonal-shaped cells, triangular-shaped cells, rectangular-shaped cells, square-shaped cells, tubular-shaped cells and corrugated-shaped cells.
4. The fiber laser machine tool of Clause 1 wherein the honeycomb core structure comprises a non-metallic honeycomb core structure.
5. The fiber laser machine tool of Clause 4 wherein the non-metallic honeycomb core structure comprises at least one of a non-metallic material, an aramid material, a polypropylene material, a polymer composite material, a thermoset material, a thermoplastic material, a fiberglass material, a carbon fiber reinforced material, an aramid paper reinforced material, a phenolic resin, a thermosetting resin, an epoxy resin, aromatic polyamide fibers, aramid fibers, meta-aramid fibers, para-aramid fibers, poly para-phenyleneterephthalamide fibers, nylon fibers, carbon fibers and glass fibers.
6. The fiber laser machine tool of Clause 1 wherein the cells in the honeycomb core structure have a width measuring at least one of approximately 1/8 inch, approximately 5/32 inch, approximately 3/16 inch, approximately 1/4 inch and approximately 3/8 inch.
7. The fiber laser machine tool of Clause 1 wherein the cells in the honeycomb core structure have a density measuring at least one of approximately two (2) to twelve (12) pounds per cubic foot, approximately four (4) to ten (10) pounds per cubic foot, approximately six (6) to eight (8) pounds per cubic foot and approximately seven (7) pounds per cubic foot.
8. The fiber laser machine tool of Clause 1 wherein the honeycomb core structure has a height measuring at least one of approximately two (2) inches to three (3) feet, approximately six (6) inches to 2.5 feet, approximately twelve (12) inches to two (2) feet and approximately 18 inches.
9. The fiber laser machine tool of Clause 1 wherein the honeycomb core structure has a width measuring at least one of approximately six (6) inches to four (4) feet, approximately twelve (12) inches to 3.5 feet, approximately 18 inches to 2.5 feet and approximately two (2) feet.
10. The fiber laser machine tool of Clause 1 wherein the honeycomb core structure has a length measuring at least one of approximately six (6) inches to eight (8) feet, approximately twelve (12) inches to six (6) feet, approximately 18 inches to four (4) feet and approximately two (2) feet to three (3) feet.
11. The fiber laser machine tool of Clause 1 wherein the inner core of the fiber laser probe is fastened to the mounting plate with the fiber optic conductor within the inner core.
12. The fiber laser machine tool of Clause 1 wherein the fiber optic conductor of the fiber laser probe is encased in a fixed inner tube within the inner core.
13. The fiber laser machine tool of Clause 12 wherein the fixed inner tube of the fiber laser probe is fastened to the mounting plate with the fiber optic conductor encased therein.
14. The fiber laser machine tool of Clause 1 wherein the fiber laser probe comprises a carbon-dioxide laser.
15. The fiber laser machine tool of Clause 1, the fiber laser probe further comprising:
   at least one bearing received over the inner core and the rotational outer sheath to facilitate selective rotation of the rotational outer sheath while the inner core remains stationary.
16. The fiber laser machine tool of Clause 1, the fiber laser probe further comprising:
   an aperture through the rotational outer sheath and oriented toward the mirror secured to the rotational outer sheath such that the mirror reflects laser energy from the fiber optic conductor through the aperture during operation of the manufacturing system.
17. The fiber laser machine tool of Clause 1, the fiber laser probe further comprising:
   a removable tip having a taper from a proximal end at the rotational outer sheath to a distal end at an end of fiber laser probe.
18. The fiber laser machine tool of Clause 1 wherein the rotary actuator further comprises at least one of a DC motor, a precision motor, a stepper motor and a servo motor.
19. The fiber laser machine tool of Clause 1 wherein the rotary actuator comprises a drive gear coupled to the shaft and the fiber laser probe comprises a follower gear installed on the rotational outer sheath, the drive gear engaged with the follower gear.
20. The fiber laser machine tool of Clause 1 wherein the rotary actuator comprises a drive gear coupled to the shaft and the fiber laser probe comprises a follower gear installed on the rotational outer sheath, the drive gear coupled to the follower gear via a drive chain.
21. The fiber laser machine tool of Clause 1 wherein the rotary actuator comprises a drive gear coupled to the shaft and a gear train installed on the mounting plate, the gear train comprising a first intermediate gear engaged with the drive gear and a second intermediate gear engaged with the first intermediate gear via a central shaft, wherein the fiber laser probe comprises a follower gear installed on the rotational outer sheath, the follower gear engaged with the second intermediate gear.
22. The fiber laser machine tool of Clause 1 wherein the rotary actuator comprises a drive pulley coupled to the shaft and the fiber laser probe comprises a follower pulley installed on the rotational outer sheath, the drive pulley coupled to the follower pulley via a drive belt.
23. The fiber laser machine tool of Clause 1 wherein the rotary actuator comprises a drive pulley coupled to the shaft and a belt train installed on the mounting plate, the belt train comprising a first intermediate pulley and a second intermediate pulley coupled to the first intermediate pulley via a common shaft, wherein the fiber laser probe comprises a follower pulley installed on the rotational outer sheath, wherein the drive pulley is coupled to the first intermediate pulley via a first drive belt and the second intermediate pulley is coupled to the follower pulley via a second drive belt.
24. The fiber laser machine tool of Clause 1, further comprising:
   a fiber laser controller in operative communication with the fiber laser probe to control power to the fiber optic conductor and to control parameters associated with the laser energy emitted from the fiber optic conductor during operation of the manufacturing system; and
   a rotary actuator controller in operative communication with the rotary actuator to control rotation of the rotational outer sheath of the fiber laser probe and the mirror secured thereto during operation of the manufacturing system.
25. The fiber laser machine tool of Clause 24, further comprising:
   a fiber laser control panel in operative communication with the fiber laser controller for operator interaction with the fiber laser controller and the fiber laser probe; and
   a rotary actuator control panel in operative communication with the rotary actuator controller for operator interaction to control rotation of the rotary actuator and the mirror.
26. A manufacturing system for modifying walls of cells in a honeycomb core structure, the manufacturing system comprising:
   a machine bed with a work surface for receiving and securing the honeycomb core structure;
   a gantry comprising a first vertical support member, a second vertical support member and a horizontal cross member spanning between distal portions of the first vertical support member and the second vertical support member, proximal portions of the first vertical support member and the second vertical support member being mounted on the machine bed and rising above the honeycomb core structure, the gantry movable in a Y-direction along the machine bed;
   an X-carriage mounted on the gantry above the honeycomb core structure, the X-carriage movable along the horizontal cross member of the gantry in an X-direction in relation to the machine bed;
   a Z-head mounted on the X-carriage above the honeycomb core structure and movable in a Z-direction in relation to the work surface and the honeycomb core structure; and
   a fiber laser machine tool mounted on the Z-head and extending toward the work surface in order to perforate a plurality of walls of a plurality of cells in the honeycomb core structure during operation of the manufacturing system.
27. The manufacturing system of Clause 26 wherein the modifying of the walls of the cells comprises at least one of perforating the walls of the cells, cutting the walls of the cells, cutting apertures in the walls of the cells, cutting openings in the walls of the cells, cutting pin holes in the walls of the cells and cutting rounded slits in the walls of the cells.
28. The manufacturing system of Clause 26 wherein the cells comprise at least one of hexagonal-shaped cells, over-extended hexagonal-shaped cells, octagonal-shaped cells, triangular-shaped cells, rectangular-shaped cells, square-shaped cells, tubular-shaped cells and corrugated-shaped cells.
29. The manufacturing system of Clause 26 wherein the honeycomb core structure comprises a non-metallic honeycomb core structure.
30. The manufacturing system of Clause 29 wherein the non-metallic honeycomb core structure comprises at least one of a non-metallic material, an aramid material, a polypropylene material, a polymer composite material, a thermoset material, a thermoplastic material, a fiberglass material, a carbon fiber reinforced material, an aramid paper reinforced material, a phenolic resin, a thermosetting resin, an epoxy resin, aromatic polyamide fibers, aramid fibers, meta-aramid fibers, para-aramid fibers, poly para-phenyleneterephthalamide fibers, nylon fibers, carbon fibers and glass fibers.
31. The manufacturing system of Clause 26 wherein the cells in the honeycomb core structure have a width measuring at least one of approximately 1/8 inch, approximately 5/32 inch, approximately 3/16 inch, approximately 1/4 inch and approximately 3/8 inch.
32. The manufacturing system of Clause 26 wherein the cells in the honeycomb core structure have a density measuring at least one of approximately two (2) to twelve (12) pounds per cubic foot, approximately four (4) to ten (10) pounds per cubic foot, approximately six (6) to eight (8) pounds per cubic foot and approximately seven (7) pounds per cubic foot.
33. The manufacturing system of Clause 26 wherein the honeycomb core structure has a height measuring at least one of approximately two (2) inches to three (3) feet, approximately six (6) inches to 2.5 feet, approximately twelve (12) inches to two (2) feet and approximately 18 inches.
34. The manufacturing system of Clause 26 wherein the honeycomb core structure has a width measuring at least one of approximately six (6) inches to four (4) feet, approximately twelve (12) inches to 3.5 feet, approximately 18 inches to 2.5 feet and approximately two (2) feet.
35. The manufacturing system of Clause 26 wherein the honeycomb core structure has a length measuring at least one of approximately six (6) inches to eight (8) feet, approximately twelve (12) inches to six (6) feet, approximately 18 inches to four (4) feet and approximately two (2) feet to three (3) feet.
36. The manufacturing system of Clause 26 wherein the work surface, the machine bed, the gantry, the X-carriage and the fiber laser machine tool are sized to fit the honeycomb core structure.
37. The manufacturing system of Clause 36 wherein the work surface and the machine bed are sized to accommodate up to three (3) feet in height, up to four (4) feet in width and up to eight (8) feet in length for the honeycomb core structure.
38. The manufacturing system of Clause 36 wherein the gantry and the X-carriage are sized to accommodate up to three (3) feet in height and up to four (4) feet in width for the honeycomb core structure.
39. The manufacturing system of Clause 36 wherein the Z-head and the fiber laser machine tool are sized to accommodate up to three (3) feet in height for the honeycomb core structure.
40. The manufacturing system of Clause 26, further comprising:
   a system controller in operative communication with the gantry, the X-carriage, the Z-head and the fiber laser machine tool to control power to the gantry, the X-carriage and the Z-head and to control parameters associated with controlling horizontal displacement and vertical displacement of the fiber laser machine tool in relation to a plurality of cells in the honeycomb core structure.
41. The manufacturing system of Clause 40, further comprising:
   an operator control panel in operative communication with the system controller for operator interaction with the gantry, the X-carriage and the Z-head to position the fiber laser machine tool to a desired cell of the plurality of cells in the honeycomb core structure.
42. The manufacturing system of Clause 26, the fiber laser machine tool comprising:
   a mounting plate mounting the fiber laser machine tool to the Z-head to enable movement of the fiber laser machine tool in the Z-direction based on the Z-head, in the Y-direction based on the gantry and in the X-direction based on the X-carriage during operation of the manufacturing system;
   a fiber laser probe comprising an inner core with a fiber optic conductor, the inner core installed on the mounting plate to prevent rotation of the fiber optic conductor, the fiber laser probe further comprising a rotational outer sheath with a mirror secured thereto for reflecting laser energy from the fiber optic conductor toward a select wall of a select cell in the honeycomb core structure to perforate the plurality of walls of the plurality of cells in the honeycomb core structure; and
   a rotary actuator installed on the mounting plate and comprising a shaft linked to the rotational outer sheath of the fiber laser probe to enable rotation of the mirror during operation of the manufacturing system.
43. The manufacturing system of Clause 42 wherein the inner core of the fiber laser probe is fastened to the mounting plate with the fiber optic conductor within the inner core.
44. The manufacturing system of Clause 42 wherein the fiber optic conductor of the fiber laser probe is encased in a fixed inner tube within the inner core.
45. The manufacturing system of Clause 44 wherein the fixed inner tube of the fiber laser probe is fastened to the mounting plate with the fiber optic conductor encased therein.
46. The manufacturing system of Clause 42 wherein the fiber laser probe comprises a carbon-dioxide laser.
47. The manufacturing system of Clause 42, the fiber laser probe further comprising:
   at least one bearing received over the inner core and the rotational outer sheath to facilitate selective rotation of the rotational outer sheath while the inner core remains stationary.
48. The manufacturing system of Clause 42, the fiber laser probe further comprising:
   an aperture through the rotational outer sheath and oriented toward the mirror secured to the rotational outer sheath such that the mirror reflects laser energy from the fiber optic conductor through the aperture during operation of the manufacturing system.
49. The manufacturing system of Clause 42, the fiber laser probe further comprising:
   a removable tip having a taper from a proximal end at the rotational outer sheath to a distal end at an end of fiber laser probe.
50. The manufacturing system of Clause 42 wherein the rotary actuator further comprises at least one of a DC motor, a precision motor, a stepper motor and a servo motor.
51. The manufacturing system of Clause 42 wherein the rotary actuator further comprises a drive gear coupled to the shaft and the fiber laser probe comprises a follower gear installed on the rotational outer sheath, the drive gear engaged with the follower gear.
52. The manufacturing system of Clause 42 wherein the rotary actuator further comprises a drive gear coupled to the shaft and the fiber laser probe comprises a follower gear installed on the rotational outer sheath, the drive gear coupled to the follower gear via a drive chain.
53. The manufacturing system of Clause 42 wherein the rotary actuator further comprises a drive gear coupled to the shaft and a gear train installed on the mounting plate, the gear train comprising a first intermediate gear engaged with the drive gear and a second intermediate gear engaged with the first intermediate gear via a central shaft, wherein the fiber laser probe comprises a follower gear installed on the rotational outer sheath, the follower gear engaged with the second intermediate gear.
54. The manufacturing system of Clause 42 wherein the rotary actuator further comprises a drive pulley coupled to the shaft and the fiber laser probe comprises a follower pulley installed on the rotational outer sheath, the drive pulley coupled to the follower pulley via a drive belt.
55. The manufacturing system of Clause 42 wherein the rotary actuator further comprises a drive pulley coupled to the shaft and a belt train installed on the mounting plate, the belt train comprising a first intermediate pulley and a second intermediate pulley coupled to the first intermediate pulley via a common shaft, wherein the fiber laser probe comprises a follower pulley installed on the rotational outer sheath, wherein the drive pulley is coupled to the first intermediate pulley via a first drive belt and the second intermediate pulley is coupled to the follower pulley via a second drive belt.
56. The manufacturing system of Clause 42, further comprising:
   a system controller in operative communication with the gantry, the X-carriage, the Z-head and the fiber laser machine tool to control power to the gantry, the X-carriage and the Z-head and to control parameters associated with controlling horizontal displacement and vertical displacement of the fiber laser machine tool in relation to a plurality of cells in the honeycomb core structure, the system controller also in operative communication with the fiber laser probe to control power to the fiber optic conductor and to control parameters associated with the laser energy emitted from the fiber optic conductor during operation of the manufacturing system, the system controller also in operative communication with the rotary actuator to control rotation of the rotational outer sheath of the fiber laser probe and the mirror secured thereto during operation of the manufacturing system.
57. The manufacturing system of Clause 56, further comprising:
   an operator control panel in operative communication with the system controller for operator interaction with the gantry, the X-carriage and the Z-head to position the fiber laser machine tool to a desired cell of the plurality of cells in the honeycomb core structure, the operator control panel also in operative communication with the system controller for operator interaction with the system controller and the fiber laser probe, the operator control panel also in operative communication with the system controller for operator interaction to control rotation of the rotary actuator and the mirror.
58. The manufacturing system of Clause 42, further comprising:
   a guide assembly mounted on the Z-head or the X-carriage to stabilize the fiber laser machine tool as it is moved vertically toward and away from the honeycomb core structure secured to the work surface of the machine bed in conjunction with movement of the Z-head in the Z-direction.
59. The manufacturing system of Clause 58 wherein the guide assembly is mounted on the Z-head, the guide assembly comprising:
   a mounting plate mounting the guide assembly to the Z-head to enable movement of the guide assembly in the Z-direction based on the Z-head, in the Y-direction based on the gantry and in the X-direction based on the X-carriage during operation of the manufacturing system;
   at least two (2) guideposts having proximal ends attached to the mounting plate and extending vertically toward the work surface of the machine bed, each guidepost fabricated to adjustably telescope from the mounting plate toward the work surface and vice versa; and
   a guide plate attached to distal ends of the at least two (2) guideposts, the guide plate comprising a guide opening aligned with the fiber laser probe of the fiber laser machine tool such that the fiber laser probe passes through the guide opening to stabilize the fiber laser probe during operation of the manufacturing system.
60. The manufacturing system of Clause 59 wherein the guide plate of the guide assembly is adjustable for vertical positioning to a reference position above a top of the honeycomb core structure prior to operation of the fiber laser machine tool.
61. The manufacturing system of Clause 60 wherein the reference position comprises a predetermined distance away from the top of the honeycomb core structure.
62. The manufacturing system of Clause 61 wherein the predetermined distance comprises at least one of approximately 1/2 inch to approximately three (3) inches, approximately 3/4 inch to approximately 2-1/2 inches, approximately one (1) inch to approximately two (2) inches, approximately 1-1/4 inch to approximately 1-3/4 inches and approximately 1-1/2 inch.
63. The manufacturing system of Clause 60 wherein, during operation of the fiber laser machine tool, the guide plate of the guide assembly is vertically adjustable for movement from the reference position toward the Z-head and back to the reference position as the Z-head moves toward and away from the honeycomb core structure and as the fiber laser probe correspondingly moves vertically through the guide opening within the select cell of the honeycomb core structure for perforation.
64. The manufacturing system of Clause 63 wherein the vertical positioning of the guide plate from the reference position toward the Z-head and back to the reference position is inverse to vertical positioning of the Z-head and the fiber laser probe of the fiber laser machine tool during operation of the manufacturing system.
65. The manufacturing system of Clause 58 wherein the guide assembly is mounted on the X-carriage, the guide assembly comprising:
   at least two (2) mounting brackets adjustably mounting the guide assembly to the X-carriage to enable movement of the guide assembly in the Y-direction based on the gantry and in the X-direction based on the X-carriage during operation of the manufacturing system;
   a guide framework having at least two (2) vertical frame bars adjustably held by the at least two (2) mounting brackets and extending vertically toward the work surface of the machine bed; and
   a guide bar attached to a distal end of the guide framework, the guide bar comprising a guide tube aligned with the fiber laser probe of the fiber laser machine tool such that the fiber laser probe passes through the guide tube to stabilize the fiber laser probe during operation of the manufacturing system.
66. The manufacturing system of Clause 65 wherein the guide framework of the guide assembly is adjustable for vertical positioning of the distal end to a reference position above a top of the honeycomb core structure prior to operation of the fiber laser machine tool.
67. The manufacturing system of Clause 66 wherein the reference position comprises a predetermined distance away from the top of the honeycomb core structure.
68. The manufacturing system of Clause 67 wherein the predetermined distance comprises at least one of approximately 1/2 inch to approximately three (3) inches, approximately 3/4 inch to approximately 2-1/2 inches, approximately one (1) inch to approximately two (2) inches, approximately 1-1/4 inch to approximately 1-3/4 inches and approximately 1-1/2 inch.
69. The manufacturing system of Clause 66 wherein, during operation of the fiber laser machine tool, the guide bar of the guide assembly remains stationary at the reference position as the Z-head moves toward and away from the honeycomb core structure and as the fiber laser probe correspondingly moves vertically through the guide tube within the select cell of the honeycomb core structure for perforation.
70. A method for modifying walls of cells in a honeycomb core structure, comprising:
   sequentially controlling horizontal displacement of a fiber laser machine tool over a plurality of cells in the honeycomb core structure on a work surface of a machine bed in a manufacturing system;
   sequentially controlling vertical displacement of a fiber laser probe of the fiber laser machine tool to a plurality of heights within each cell of the plurality of cells, the fiber laser probe comprising an inner core with a fiber optic conductor;
   sequentially controlling angular displacement of a mirror secured to a rotational outer sheath of the fiber laser probe to a plurality of angular positions in walls in each cell of the plurality of cells over the plurality of heights within each cell of the plurality of cells; and
   sequentially controlling a plurality of laser emissions that reflect from the mirror of the fiber laser probe toward a plurality of target points on the walls in each cell of the plurality of cells over the plurality of heights and the plurality of angular positions to cut a plurality of perforations in each cell of the plurality of cells.
71. The method of Clause 70, further comprising:
   placing the honeycomb core structure on the work surface of the machine bed; and
   securing the honeycomb core structure to the work surface.
72. The method of Clause 71, further comprising:
   adjusting a guide assembly for stabilizing the fiber laser probe of the fiber laser machine tool such that the guide assembly is vertically positioned to a reference position above a top of the honeycomb core structure.
73. The method of Clause 70, further comprising:
   identifying a desired cell in the honeycomb core structure;
   controlling horizontal displacement of the fiber laser machine tool to position the fiber laser probe of the fiber laser machine tool over the desired cell;
   controlling vertical displacement of the fiber laser machine tool to position the fiber laser probe to a desired height within the desired cell;
   controlling angular displacement of the rotational outer sheath of the fiber laser probe to orient the mirror secured to the rotational outer sheath toward a target point in the desired cell; and
   activating laser emissions that reflect from the mirror of the fiber laser probe toward the target point to cut a perforation in the desired cell at the target point.
74. The method of Clause 73 wherein the laser emissions are activated at a predetermined power level for a predetermined duration.
75. The method of Clause 74 wherein the predetermined duration comprises at least one of approximately two (2) to 20 milliseconds, approximately four (4) to 16 milliseconds, approximately six (6) to twelve (12) milliseconds and approximately eight (8) milliseconds.
76. The method of Clause 73 wherein the perforation comprises a predetermined shape and a predetermined major dimension.
77. The method of Clause 76 wherein the predetermined shape comprises at least one of a circular shape, an oval shape, an oblong shape and an elliptical shape.
78. The method of Clause 76 wherein the predetermined major dimension comprises at least one of approximately five (5) to 50 thousandths inch, approximately ten (10) to 40 thousandths inch, approximately 15 to 30 thousandths inch and approximately 20 thousandths inch.
79. The method of Clause 73, the controlling of the horizontal displacement comprising:
   controlling horizonal displacement of a guide assembly for stabilizing the fiber laser probe of the fiber laser machine tool to maintain the guide assembly over the desired cell along with the fiber laser probe.
80. The method of Clause 73, the controlling of the vertical displacement comprising:
   controlling vertical displacement of a guide assembly for stabilizing the fiber laser probe of the fiber laser machine tool to maintain the guide assembly at a reference position above a top of the honeycomb core structure over the desired cell along with the fiber laser probe.
81. The method of Clause 80 wherein the vertical displacement of the guide assembly is inverse to the vertical displacement of the fiber laser machine tool.
82. The method of Clause 73, further comprising:
   adjusting at least one of i) the vertical displacement of the fiber laser machine tool to position the fiber laser probe to a next desired height and ii) the angular displacement of the rotational outer sheath of the fiber laser probe to orient the mirror toward a next target point in the desired cell; and
   activating laser emissions that reflect from the mirror of the fiber laser probe toward the next target point to cut another perforation in the desired cell.
83. The method of Clause 82, the adjusting of the vertical displacement comprising:
   adjusting vertical displacement of a guide assembly for stabilizing the fiber laser probe of the fiber laser machine tool to maintain the guide assembly at a reference position above a top of the honeycomb core structure over the desired cell along with the fiber laser probe.
84. The method of Clause 83 wherein the vertical displacement of the guide assembly is inverse to the vertical displacement of the fiber laser machine tool.
85. The method of Clause 82 wherein the adjusting of the vertical displacement comprises moving the fiber laser machine tool up or down a predetermined distance.
86. The method of Clause 85 wherein the predetermined distance comprises at least one of approximately one-fourth inch to four (4) inches, approximately one-half inch to three (3) inches, approximately three-fourths inch to two (2) inches and approximately one (1) inch.
87. The method of Clause 82 wherein the adjusting of the angular displacement comprises moving the rotational outer sheath of the fiber laser probe left or right by a predetermined angle in relation to a central z-axis for the fiber laser probe.
88. The method of Clause 87 wherein the predetermined angle comprises at least one of approximately 30 degrees, approximately 45 degrees, approximately 60 degrees and approximately 120 degrees.
89. The method of Clause 82, further comprising:
   repeating the adjusting of at least one of i) the vertical displacement of the fiber laser machine tool and ii) the angular displacement of the rotational outer sheath and the activating of the laser emissions that reflect from the mirror of the fiber laser probe toward target points in the desired cell until a plurality of perforations are cut in the desired cell.
90. The method of Clause 89, the repeating of the adjusting of the vertical displacement comprising:
   repeating the adjusting of the vertical displacement of a guide assembly for stabilizing the fiber laser probe of the fiber laser machine tool to maintain the guide assembly at a reference position above a top of the honeycomb core structure over the desired cell along with the fiber laser probe.
91. The method of Clause 90 wherein the vertical displacement of the guide assembly is inverse to the vertical displacement of the fiber laser machine tool.
92. The method of Clause 73, further comprising:
   repeating the identifying of the desired cell, the controlling of the horizontal displacement, the controlling of the vertical displacement, the controlling of the angular displacement and the activating of the laser emissions that reflect from the mirror of the fiber laser probe toward target points until a plurality of perforations are cut in a plurality of desired cells.
93. The method of Clause 92, the repeating of the controlling of the horizontal displacement comprising:
   repeating controlling of the horizonal displacement of a guide assembly for stabilizing the fiber laser probe of the fiber laser machine tool to maintain the guide assembly over the desired cell along with the fiber laser probe.
94. The method of Clause 92, the repeating of the controlling of the vertical displacement comprising:
   repeating controlling of the vertical displacement of a guide assembly for stabilizing the fiber laser probe of the fiber laser machine tool to maintain the guide assembly at a reference position above a top of the honeycomb core structure over the desired cell along with the fiber laser probe.
95. The method of Clause 94 wherein the vertical displacement of the guide assembly is inverse to the vertical displacement of the fiber laser machine tool.
96. The method of Clause 73, further comprising:
   repeating the identifying of the desired cell, the controlling of the horizontal displacement, the controlling of the vertical displacement, the controlling of the angular displacement and the activating of the laser emissions that reflect from the mirror of the fiber laser probe toward target points until a plurality of perforations are cut in all walls of all cells of the honeycomb core structure.
97. The method of Clause 96, the repeating of the controlling of the horizontal displacement comprising:
   repeating controlling of the horizonal displacement of a guide assembly for stabilizing the fiber laser probe of the fiber laser machine tool to maintain the guide assembly over the desired cell along with the fiber laser probe.
98. The method of Clause 96, the repeating of the controlling of the vertical displacement of the fiber laser machine tool comprising:
   repeating controlling of the vertical displacement of a guide assembly for stabilizing the fiber laser probe of the fiber laser machine tool to maintain the guide assembly at a reference position above a top of the honeycomb core structure over the desired cell along with the fiber laser probe.
99. The method of Clause 98 wherein the vertical displacement of the guide assembly is inverse to the vertical displacement of the fiber laser machine tool.

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, various examples of the fiber laser machine tools 100, manufacturing systems 300 and methods 1000, 1100, 1200, 1300, 1600, 2600 for modifying walls 202 of cells 204 in honeycomb core structures 200 have been shown and described, modifications may occur to those skilled in the art upon reading the specification. The present application includes such modifications and is limited only by the scope of the claims.

## Claims

1. A fiber laser machine tool (100) for modifying walls (202) of cells (204) in a honeycomb core structure (200), the fiber laser machine tool (100) comprising:
a mounting plate (102) for mounting the fiber laser machine tool (100) to a manufacturing system (300) to enable movement of the fiber laser machine tool (100) in a vertical direction (Z) and a horizontal direction (X, Y) in relation to the honeycomb core structure (200) during operation of the manufacturing system (300);
a fiber laser probe (104) comprising an inner core (402) with a fiber optic conductor (404), the inner core (402) installed on the mounting plate (102) to prevent rotation of the fiber optic conductor (404), the fiber laser probe (104) further comprising a rotational outer sheath (406) with a mirror (502) secured thereto for reflecting laser energy from the fiber optic conductor (404) toward a wall (202) of a cell (204) in the honeycomb core structure (200) to perforate a plurality of walls (202) of a plurality of cells (204) in the honeycomb core structure (200); and
a rotary actuator (106) installed on the mounting plate (102) and comprising a shaft (108) linked to the rotational outer sheath (406) of the fiber laser probe (104) to enable rotation of the mirror (502) during operation of the manufacturing system (300).

2. The fiber laser machine tool of Claim 1 wherein the modifying of the walls (202) of the cells (204) comprises at least one of perforating the walls (202) of the cells (204), cutting the walls (202) of the cells (204), cutting apertures in the walls (202) of the cells (204), cutting openings in the walls (202) of the cells (204), cutting pin holes in the walls (202) of the cells (204) and cutting rounded slits in the walls (202) of the cells (204).

3. The fiber laser machine tool of Claim 1 or 2, wherein the inner core (402) of the fiber laser probe (104) is fastened to the mounting plate (102) with the fiber optic conductor (404) within the inner core (402).

4. The fiber laser machine tool of any one of the preceding claims wherein the fiber optic conductor (404) of the fiber laser probe (104) is encased in a fixed inner tube (408) within the inner core (402).

5. The fiber laser machine tool of Claim 4 wherein the fixed inner tube (408) of the fiber laser probe (104) is fastened to the mounting plate (102) with the fiber optic conductor (404) encased therein.

6. The fiber laser machine tool of any one of the preceding claims, the fiber laser probe (104) further comprising:
at least one bearing (410) received over the inner core (402) and the rotational outer sheath (406) to facilitate selective rotation of the rotational outer sheath (406) while the inner core (402) remains stationary.

7. The fiber laser machine tool of any one of the preceding claims, the fiber laser probe (104) further comprising:
an aperture (504) through the rotational outer sheath (406) and oriented toward the mirror (502) secured to the rotational outer sheath (406) such that the mirror (502) reflects laser energy from the fiber optic conductor (404) through the aperture (504) during operation of the manufacturing system (300).

8. The fiber laser machine tool of any one of the preceding claims, the fiber laser probe (104) further comprising:
a removable tip (506) having a taper from a proximal end (508) at the rotational outer sheath (406) to a distal end (510) at an end of fiber laser probe (104).

9. The fiber laser machine tool of any one of the preceding claims, wherein the rotary actuator (106) comprises a drive pulley (802) coupled to the shaft (108) and a belt train (900) installed on the mounting plate (102), the belt train (900) comprising a first intermediate pulley (902) and a second intermediate pulley (904) coupled to the first intermediate pulley (902) via a common shaft (906), wherein the fiber laser probe (104) comprises a follower pulley (804) installed on the rotational outer sheath (406), wherein the drive pulley (802) is coupled to the first intermediate pulley (902) via a first drive belt (908) and the second intermediate pulley (904) is coupled to the follower pulley (804) via a second drive belt (910).

10. The fiber laser machine tool of any one of the preceding claims, further comprising:
a fiber laser controller (109) in operative communication with the fiber laser probe (104) to control power to the fiber optic conductor (404) and to control parameters associated with the laser energy emitted from the fiber optic conductor (404) during operation of the manufacturing system (300); and
a rotary actuator controller (110) in operative communication with the rotary actuator (106) to control rotation of the rotational outer sheath (406) of the fiber laser probe (104) and the mirror (502) secured thereto during operation of the manufacturing system (300).

11. A manufacturing system (300) for modifying walls (202) of cells (204) in a honeycomb core structure (200), the manufacturing system (300) comprising:
a machine bed (302) with a work surface (304) for receiving and securing the honeycomb core structure (200);
a gantry (306) comprising a first vertical support member (316), a second vertical support member (318) and a horizontal cross member (320) spanning between distal portions (322) of the first vertical support member (316) and the second vertical support member (318), proximal portions (324) of the first vertical support member (316) and the second vertical support member (318) being mounted on the machine bed (302) and rising above the honeycomb core structure (200), the gantry (306) movable in a Y-direction (Y) along the machine bed (302);
an X-carriage (308) mounted on the gantry (306) above the honeycomb core structure (200), the X-carriage (308) movable along the horizontal cross member (320) of the gantry (306) in an X-direction (X) in relation to the machine bed (302);
a Z-head (310) mounted on the X-carriage (308) above the honeycomb core structure (200) and movable in a Z-direction (Z) in relation to the work surface (304) and the honeycomb core structure (200); and
a fiber laser machine tool (100) mounted on the Z-head (310) and extending toward the work surface (304) in order to perforate a plurality of walls (202) of a plurality of cells (204) in the honeycomb core structure (200) during operation of the manufacturing system (300).

12. The manufacturing system of Claim 11 wherein the modifying of the walls (202) of the cells (204) comprises at least one of perforating the walls (202) of the cells (204), cutting the walls (202) of the cells (204), cutting apertures in the walls (202) of the cells (204), cutting openings in the walls (202) of the cells (204), cutting pin holes in the walls (202) of the cells (204) and cutting rounded slits in the walls (202) of the cells (204).

13. A method (1000) for modifying walls (202) of cells (204) in a honeycomb core structure (200), comprising:
sequentially controlling (1002) horizontal displacement of a fiber laser machine tool (100) over a plurality of cells (204) in the honeycomb core structure (200) on a work surface (304) of a machine bed (302) in a manufacturing system (300);
sequentially controlling (1004) vertical displacement of a fiber laser probe (104) of the fiber laser machine tool (100) to a plurality of heights within each cell (204) of the plurality of cells (204), the fiber laser probe (104) comprising an inner core (402) with a fiber optic conductor (404);
sequentially controlling (1006) angular displacement of a mirror (502) secured to a rotational outer sheath (406) of the fiber laser probe (104) to a plurality of angular positions in walls (202) in each cell (204) of the plurality of cells (204) over the plurality of heights within each cell (204) of the plurality of cells (204); and
sequentially controlling (1008) a plurality of laser emissions that reflect from the mirror (502) of the fiber laser probe (104) toward a plurality of target points on the walls (202) in each cell (204) of the plurality of cells (204) over the plurality of heights and the plurality of angular positions to cut a plurality of perforations in each cell (204) of the plurality of cells (204).

14. The method of Claim 13, further comprising:
placing (1010) the honeycomb core structure (200) on the work surface (304) of the machine bed (302); and
securing (1012) the honeycomb core structure (200) to the work surface (304).

15. The method (1600) of Claim 14, further comprising:
adjusting (1602) a guide assembly (1402) for stabilizing the fiber laser probe (104) of the fiber laser machine tool (100) such that the guide assembly (1402) is vertically positioned to a reference position (1416, 1514) above a top (206) of the honeycomb core structure (200).
